# EUROPEAN PATENT SPECIFICATION

(11) **EP 2 495 362 B1**
(45) Date of publication and mention of the grant of the patent: **11.10.2017**
(21) Application number: 10826291.6
(22) Date of filing: 18.10.2010
(51) Int. Cl.: D06F 25/00, D06F 33/02, D06F 58/02, D06F 58/28, D06F 58/20

(54) **CLOTHES DRYER AND WASHER/DRYER**
KLEIDUNGSTROCKNER UND WASCHMASCHINEN-/TROCKNEREINHEIT
SÈCHE-LINGE ET MACHINE À LAVER/SÈCHE-LINGE

(30) Priority: 27.10.2009 JP 2009246357; 27.10.2009 JP 2009246358
(43) Date of publication of application: 05.09.2012
(73) Proprietor: Panasonic Corporation, Kadoma-shi Osaka 571-8501 (JP)
(72) Inventor: TANIGUCHI, Mitsunori, Chuo-ku, Osaka-shi Osaka 540-6207 (JP); FUJIWARA, Norihiko, Chuo-ku, Osaka-shi Osaka 540-6207 (JP); NAKAMOTO, Shigeharu, Chuo-ku, Osaka-shi Osaka 540-6207 (JP); KANG, Ahin, Chuo-ku, Osaka-shi Osaka 540-6207 (JP)
(74) Representative: Schwabe - Sandmair - Marx
(86) International application number: PCT/JP2010/006165
(87) International publication number: WO 2011/052154

(56) References cited:
- JP-A- 11 223 372
- JP-A- 2003 088 700
- JP-A- 2005 318 916
- JP-A- 2005 318 916
- JP-A- 2008 067 742
- JP-A- 2009 072 502
- JP-A- 2009 195 364
- JP-A- 2009 195 364
- JP-U- 62 189 092
- US-A1- 2005 044 744

## Description

### Background of the Invention

### Field of the Invention

The present invention relates to a laundry dryer which dries laundry and a washer dryer which has functions to wash and dry the laundry.

### Description of the Related Art

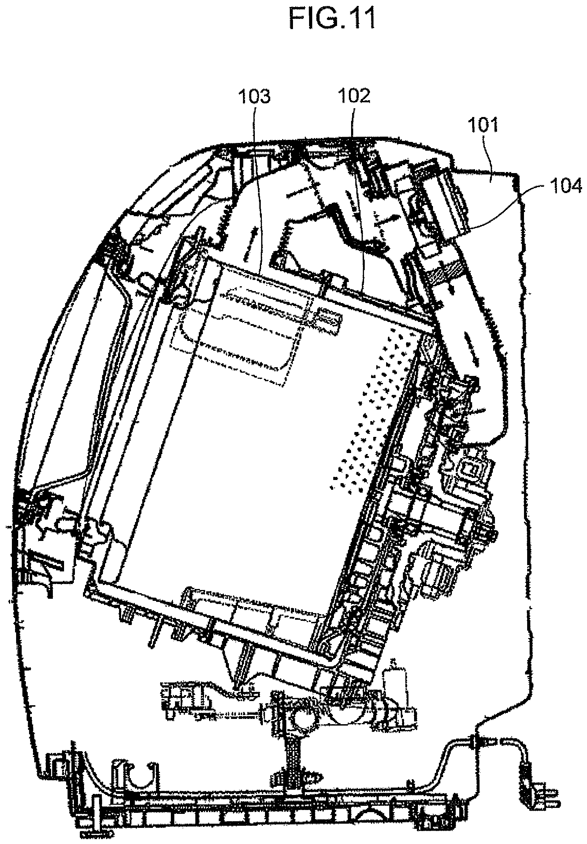

A conventional drum-type washer dryer as shown in Fig. 11 blows dry air at high temperature and low humidity, from a blower 104 into a drum 103, which is enclosed in an outer tank 102 elastically supported in a main body 101. The dry air dries laundry in the drum 103. A heater is used as means for heating the dry air.

Patent Document 1 discloses that an increase in volume or velocity of the dry air blown into the drum 103 effectively works to reduce wrinkles during a drying process. If power consumption by the blower is decreased, the blower 104 has to decrease the dry air volume as appropriate. For example, the blower 104 may change the rotational speed to change the air volume.

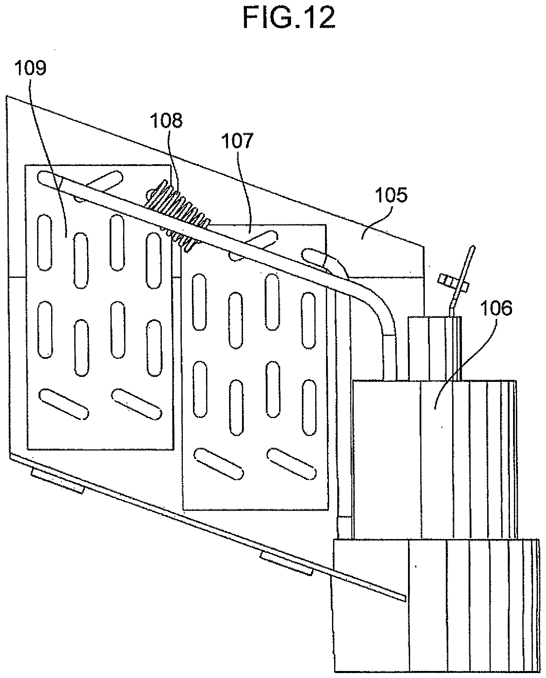

In recent years, a heat pump device 105 as shown in Fig. 12 has been used instead of the heater in terms of power saving. This heat pump device 105 comprises a compressor 106, a radiator 107, a throttle mechanism 108 and a heat absorber 109. With regard to this heat pump device 105, refrigerant is compressed by the compressor 106 so that the refrigerant becomes high temperature and high pressure. The refrigerant then enters the radiator 107, so that the refrigerant heats the circumambient air by means of heat exchange. Meanwhile, the refrigerant becomes cool and liquefied. The pressure of the liquefied refrigerant is reduced by the throttle mechanism 108 so that the refrigerant becomes low temperature and low pressure. The liquid refrigerant thereafter enters the heat absorber 109 to exchange the heat with the circumambient air, so that the air becomes dehumidified and cooled. On the other hand, the refrigerant is heated and becomes steam. The refrigerant then returns to the compressor 106.

With regard to the drum-type washer dryer which uses the heat pump device 105, the air in the drum 103 is blown from the blower 104 to the heat absorber 109. The air is then dehumidified and cooled by the heat absorber 109, and thereafter heated by the radiator 7. Thus, the dry air becomes high temperature and low humidity. The laundry is dried by the dry air returning to the drum 103 (c.f., Patent Document 1). With regard to this drum-type washer dryer, the rotational speed of the compressor 106 is controlled so that the temperature of the air flowing into the drum 103 becomes constant or so that the temperature of the refrigerant in the radiator 107 is less likely to exceed a prescribed value. If the temperature of the refrigerant discharged from the compressor 106 exceeds the prescribed value, lubricant oil in the compressor 106 becomes severely degraded. Therefore, there are safety measures to stop operating the compressor 106 if the temperature of the discharged refrigerant exceeds the prescribed value.

The usage of the heat pump device instead of the heater, which is utilized in the disclosed technologies in Patent Document1, may contribute to further energy saving but cause the following problems. If the rotation speed of the blower is decreased to change the dry air volume blown into the drying chamber so that the dry air volume considerably goes down, the control of the compressor may not keep up with the considerable change in the dry air volume. Therefore, there may not be complete vaporization of the refrigerant at the heat absorber. In this case, the liquid refrigerant is compressed by the compressor to problematically cause malfunction of the compressor.

On contrary, if the rotational speed of the blower is increased to turn the dry air volume up, the heat exchange amount goes up at the heat absorber, so that the refrigerant may be excessively heated at the exit of the heat absorber. In this case, the temperature of the refrigerant discharged from the compressor may exceed the prescribed value to problematically make the compressor stopped. If the compressor is stopped as described above, the dehumidification may not be performed. Therefore the drying time may become long.

Patent Document 1: JP 2009-72502 A

US 2005/0044744 A1 relates to a drying apparatus having a purpose of shortening a drying time of laundry, comprising an accommodating chamber in which the laundry is accommodated, and executing a washing operation of the laundry and a drying operation after end of the washing operation in the accommodating chamber, the machine comprising: a refrigerant circuit in which a compressor, a gas cooler, an expansion valve, and an evaporator are successively connected to one another in an annular form via a piping; an air circulation path for discharging air which has exchanged heat with the gas cooler into the accommodating chamber by a blower to exchange the heat of the air passed through the accommodating chamber with the evaporator; and a control device for operating the compressor and the blower to perform the drying operation, wherein the control device starts the operation of the compressor before entering the drying operation.

### SUMMARY OF THE INVENTION

It is an object of the present invention to provide an improved and useful laundry dryer in which the above-mentioned problems are eliminated. It is furthermore an object of this invention to prevent the compressor from breaking down or stopping under a change in the dry air volume and to make a laundry dryer and washer dryer reliable. In order to achieve the above-mentioned object, there is provided a laundry dryer according to claim 1 and claim 11. Advantageous embodiments are defined by the dependent claims.

The laundry dryer according to one aspect of the present invention has a storage portion which stores laundry to be dried; a heat pump device including a pipeline connecting a compressor, which compresses refrigerant, a radiator, a pressure reducer, which reduces the pressure of the refrigerant after heat emission at the radiator, and a heat absorber, so that the pipeline allows sequential circulation of the refrigerant through the compressor, the radiator, the pressure reducer and the heat absorber; a circulation duct in which a blower is situated to blow dry air so that the dry air sequentially circulates from the storage portion and passes through the heat absorber and the radiator to the storage portion again; an air volume controller which controls the blower to adjust a dry air volume in the circulation duct; and a compressor controller which controls a rotational speed of the compressor, wherein the compressor controller changes the rotational speed of the compressor based on a fluctuation in the dry air volume in the circulation duct.

The laundry dryer according to another aspect of the present invention has a storage portion which stores laundry to be dried; a heat pump device including a pipeline connecting a compressor, which compresses refrigerant, a radiator, a pressure reducer, which reduces the pressure of the refrigerant after heat emission at the radiator, and a heat absorber, so that the pipeline allows sequential circulation of the refrigerant; a circulation duct in which a blower is situated to blow dry air so that the dry air sequentially circulates from the storage portion and passes through the heat absorber and the radiator to the storage portion again; an air volume controller which controls the blower to adjust a dry air volume in the circulation duct; and a pressure reducer controller which controls a throttle amount of the pressure reducer, wherein the pressure reducer controller changes the throttle amount of the pressure reducer based on a fluctuation in the dry air volume in the circulation duct.

According to the present invention, it becomes less likely that the compressor is broken down or stopped under a change in the dry air volume. Therefore, the laundry and washer dryer becomes very reliable.

The other objects, features and unique aspects of the present invention should be sufficiently understandable from the ensuing descriptions. The advantages of the present invention should be obvious from the ensuing explanation which is given with reference to the appended drawings.

### BRIEF DESCRIPTION OF THE DRAWINGS

Fig. 1 is a lateral cross-sectional view schematically showing a configuration of the drum-type washer dryer according to one embodiment of the present invention.
Fig. 2 is a perspective view showing the cross section of main parts of the drum-type washer dryer.
Fig. 3 is a block diagram showing a schematic configuration of the drum-type washer dryer.
Fig. 4 is a time chart exemplifying a relationship among the dry air volume, rotational speed of the compressor and pressure reduction amount in the drum-type washer dryer.
Fig. 5 is another time chart exemplifying a relationship among the dry air volume, rotational speed of the compressor and pressure reduction amount in the drum-type washer dryer.
Fig. 6 is a time chart exemplifying operation of the drum-type washer dryer at duct switching operation.
Fig. 7 is a block diagram showing a schematic configuration of the drum-type washer dryer according to another embodiment of the present invention.
Fig. 8 is a time chart exemplifying a relationship between the dry air volume and throttle amount of the pressure reducer in the drum-type washer dryer.
Fig. 9 is another time chart exemplifying a relationship between the dry air volume and throttle amount of the pressure reducer in the drum-type washer dryer.
Fig. 10 is a time chart exemplifying operation of the drum-type washer dryer at duct switching operation.
Fig. 11 is a lateral cross section showing a schematic configuration of a conventional drum-type washer dryer.
Fig. 12 is a perspective view showing a schematic configuration of the heat pump device for use in a conventional laundry dryer.

### DESCRIPTION OF THE PREFERRED EMBODIMENTS

### (Embodiment 1)

The exemplary drum-type washer dryer of the present invention is described with reference to the accompanying drawings. It should be noted that the following embodiments are examples for embodying the present invention, and are not intended for limiting any technical scopes of the present invention.

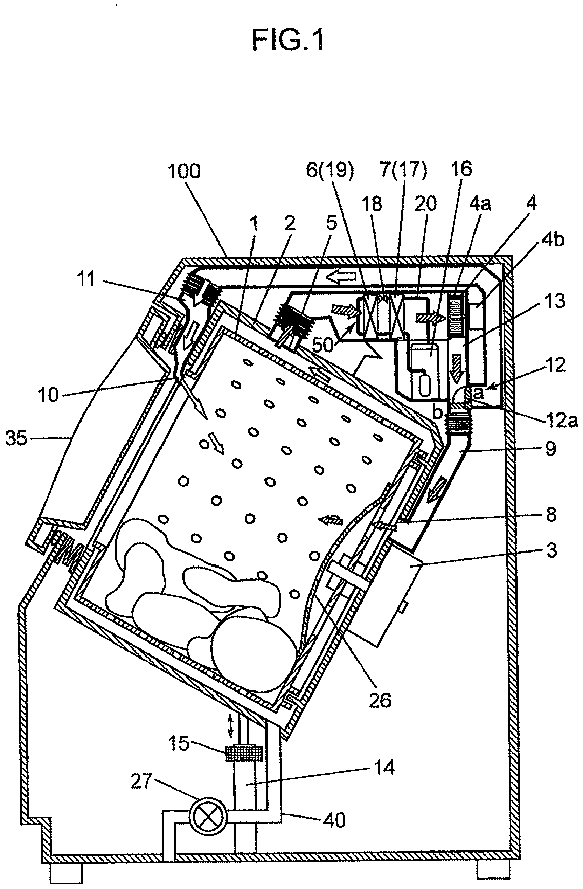

Fig. 1 is a lateral cross sectional view of the drum-type washer dryer according to one embodiment of the present invention.

In Fig. 1, a cylindrical drum 1 (storage portion), which opens forward and has a bottom surface to store laundry, is supported inside the housing 100. The cylindrical drum 1 is stored in a cylindrical water tub 2 which stores wash water. A drum drive motor 3 (drum driver) is mounted on the rear surface of the water tub 2. The drum drive motor 3 rotates the drum 1 around the rotating axis which is inclined upward to the front.

The housing 100 is provided with a door 35 which faces the open-end side of the drum 1, so that a user may open the door 35 to place and take out laundry (clothes) in and from the drum 1. A water supply pipe, on which a water supply valve (not shown) is mounted, and a drain pipe 40, on which a drain valve 27 is mounted, are connected to the water tub 2.

A blower 4 blows dry air to dry the laundry, so that the dry air getting rid of moisture from the laundry in the drum 1 becomes humid. The dry air then passes through an exhaust outlet 5 situated on the circumferential surface of the drum 1 and is exhausted outside the drum 1. The exhausted dry air is dehumidified by a dehumidifier 6. The dehumidified dry air by the dehumidifier 6 is then heated by a heater 7. The heated dry air is guided by one of a first duct 9 or a second duct 11, and is once again blown into the drum 1. The first duct 9 includes a first outlet 8 which opens at the rear of the drum 1 whereas the second duct 11 includes a second outlet 10 which opens at the front periphery of the drum 1. The first outlet 8 of the first duct 9 has a larger cross-sectional area, through which the air passes, than the second outlet 10. A large volume of the dry air may be blown from the first outlet 8 in comparison to the second duct 11 due to less pressure loss of the first outlet 8. The second outlet 10 of the second duct 11 has a narrower cross-sectional area, through which the air passes, than the first outlet 8. The dry air is blown at higher pressure and higher velocity into the drum 1 in comparison to the first outlet 8.

In the case of drum-type washer dryers, it is usual to narrow a gap between the front of the rotary drum 1 and the water tub 2 as much as possible, in order to prevent the laundry from entering into the gap. The second outlet 10 may be placed in this narrow space because the second outlet 10 has the relatively narrow cross-sectional area, through which the air is blown at high pressure and high velocity, although it is spatially difficult to mount an exhaust outlet which has a wide opening to cause little pressure loss. On the other hand, there is a space wide enough at the rear end of the drum 1 to place the first outlet 8, which has a relatively large opening, on the bottom surface. If the first outlet 8 is covered with a cover 26 on which numerous perforations are formed at a large aperture ratio to allow air passage, it becomes less likely that the laundry enters in the first outlet 8. Accordingly, the first outlet 8, which has relatively small pressure loss, may be mounted on the bottom surface of the drum 1 at the rear.

If the laundry is agitated by the rotation of the drum 1 around the rotation axis which is inclined upward to the front, it becomes likely that small laundry such as socks, handkerchiefs and briefs gathers at the rear end of the drum 1. Meanwhile, it becomes likely that long laundry such as long-sleeved underwear, long pants, long-sleeved dress shirts and long-sleeved pajamas gathers at the front of the drum 1. Accordingly, if a mixture of small and long laundries is dried and if a large volume of the dry air is blown from the first outlet 8, which is situated at the rear end of the drum 1, the dry air comes into contact with the small laundry at first because the small laundry gathers at the back of the drum 1. The dry air then passes through the small laundry to reach the long laundry at the front of the drum 1. Thus, both the small and long laundries may be efficiently dried. In particular, the small laundry may be dried with relatively few wrinkles. It is likely that the long laundry wrinkles because sleeves and alike are likely to be twisted by the agitation during the drying process. If wind (dry air) is blown from the second outlet 10 at the front of the drum 1 and comes in contact with the long laundry, the drying speed may go up because the long laundry tends to gather at the front of the drum 1. If the wind (dry air) is blown from the second outlet 10 at high pressure and high velocity and comes into contact with the long laundry, it becomes likely that the long laundry is stretched. In addition, the long laundry is moved a lot by the wind, so that the wrinkles are also effectively decreased.

A duct switcher 12 is situated at the bifurcation of the first and second ducts 9, 11 which are situated at the downstream side of the blower 4. The duct switcher 12 is used to switch the passage of the dry air to one of the first and second ducts 9, 11. The duct switcher 12 comprises a valve 12a, which is pivotally supported at the bifurcation of the first and second ducts 9, 11, and a driver (not shown) which drives and rotates the valve 12a. If the valve 12a rotates to "a-side" in Fig. 1 to close the second duct 11, the first duct 9 opens, so that the dry air blown by the blower 4 may pass through the first duct 9. On the other hand, if the valve 12a rotates to "b-side" in Fig. 1 to close the first duct 9, the second duct 11 opens so that the dry air blown by the blower 4 may pass through the second duct 11.

It should be noted that several first outlets 8 may be provided although only one first outlet 8 of the first duct 9 is provided in this embodiment. Likewise, several second outlets 10 may be provided although only one second outlet 10 of the second duct 11 is exemplarily shown.

The blower 4 and the duct switcher 12 are situated in a circulation duct 13. The dry air goes through the drum 1, the exhaust outlet 5, the dehumidifier 6 and the heater 7 sequentially and is blown out again from the first or second outlet 8, 10. Thus, the dry air is circulated in the drum-type washer dryer.

The blower 4 is situated between the heater 7 and the duct switcher 12. The dry air heated by the heater 7 is blown by the blower 4 toward the downstream side of the circulation duct 13. The blower 4 comprises a blast fan 4a and a blast fan motor 4b. The blower 4 rotates the blast fan 4a so that volumetric air flow through the first duct 9 becomes a predetermined air volume which is greater than the air volume through the second duct 11 if the duct switcher 12 switches to the first duct 9 under control of the air volume controller 73, which is described later. If the duct switcher 12 switches to the second duct 11, the blast fan 4a is rotated so that the air passing through the second outlet 10 of the second duct 11 becomes a predetermined air velocity which is higher than the velocity of the air passing through the first outlet 8. For example, the velocity of the air passes through the first outlet 8 may be set to about 10 m/s while the velocity of the air passing through the second outlet 10 may be set to no less than 50 m/s. It should be noted that the velocities of the air passing through the first and second outlets 8, 10 are not limited to the aforementioned values. The air velocity may be set to any value as long as the air velocity through the second outlet is higher than the air velocity through the first outlet 8.

The drum-type washer dryer according to this embodiment operates the duct switcher 12 to switch between the first and second ducts 9, 11 during the drying process, so that a larger volume of the air passes through the first duct 9 than the second duct 11, and the air passes at higher velocity through the second outlet 10 of the second duct 11 than the first outlet 8.

The exhaust outlet 5 is relatively farther from the first outlet 8 than the second outlet 10 (i.e., the exhaust outlet 5 is relatively closer to the second outlet 10 and farther from the first outlet 8). Thus, the exhaust outlet 5 is closer to the front than the rear of the drum 1. The exhaust outlet 5 may be closer to the second outlet 10 at the front of the drum 1 so that the exhaust outlet 5 becomes the most distant from the first outlet 8.

The exhaust outlet 5 is situated in an upper portion of the drum 1, so that the dry air may be effectively exhausted upwardly after the contact with the laundry. It should be noted that the exhaust outlet 5 may be situated at another place than at the upper portion of the drum 1 in a drum-type laundry dryer, which excludes washing functions. The exhaust outlet 5 is preferably situated above the wash water level in the drum-type washer dryer because the exhaust outlet 5 may be affected by the wash water.

The second outlet 10 opens at a front upper portion of the drum 1. The dry air, which is blown out from the second outlet 10, may reach distant positions from the second outlet 10 even if the exhaust outlet 5 is closer to the second outlet 10 since the dry air is blown out at high pressure and high air velocity from the second outlet 10. Therefore, the wrinkles are still effectively stretched because the contact between the laundry and the dry air is not weakened so much. Therefore, the wrinkles are still effectively stretched by the dry air at high pressure and high velocity. The dry air at high pressure and high velocity is effectively blown to the laundry, which are bounced up by the rotation of the drum 1 to effectively decrease the wrinkles.

A damper 14 below the water tub 2 supports the water tub 2. The damper 14 damps resultant vibration of the water tub 2 from the rotation of the drum 1 under an unbalanced condition of weight because of uneven laundry distribution in the drum 1 during the spin-drying process and alike. The damper 14 is provided with a laundry amount detector 15 which detects vertical displacement of a damper shaft and alike, which results from a change in laundry weight in the supported water tub 2, to measure a laundry amount.

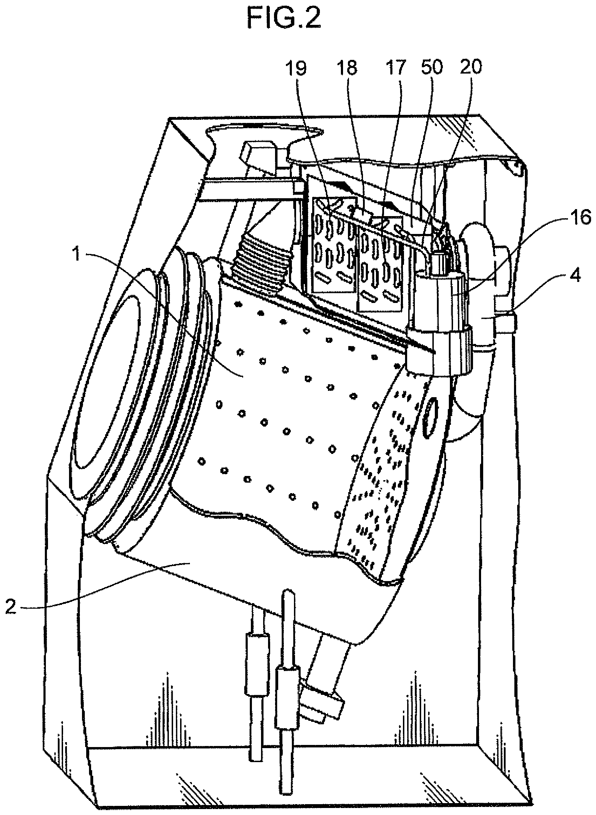

The drum-type washer dryer of this embodiment carries out dehumidification and heating processes by means of the heat-pump technology. Therefore, the washer dryer has a heat pump device 50. The heat pump device 50 has a compressor 16, which compresses refrigerant, a radiator 17, which emits heat of the refrigerant that becomes a high temperature and high pressure as a result of the compression, a pressure reducer 18, which reduces the pressure of the pressurized refrigerant, a heat absorber 19, which absorbs heat from the periphery by means of the refrigerant under resultant low pressure from the pressure reduction, and a pipeline 20, which connects the aforementioned four elements to circulate the refrigerant as shown in Fig. 2. As shown in Fig. 1, the heat absorber 19 in the heat pump device 50 is used as the aforementioned dehumidifier 6. The radiator 17 is used as the aforementioned heater 7.

In this embodiment, an electric expansion valve is used as the pressure reducer 18. If the throttle amount of the expansion valve, the pressure reduction amount is changed. Since the electric expansion valve may electrically adjust the throttle amount of the expansion valve, the throttle amount of the pressure reducer 18 may be easily changed.

Standard refrigerant such as HFC (hydrofluorocarbon)-based refrigerant, HFO (hydrofluoroolefin)-based refrigerant or carbon dioxide refrigerant may be suitably used as the refrigerant for the heat pump device 50.

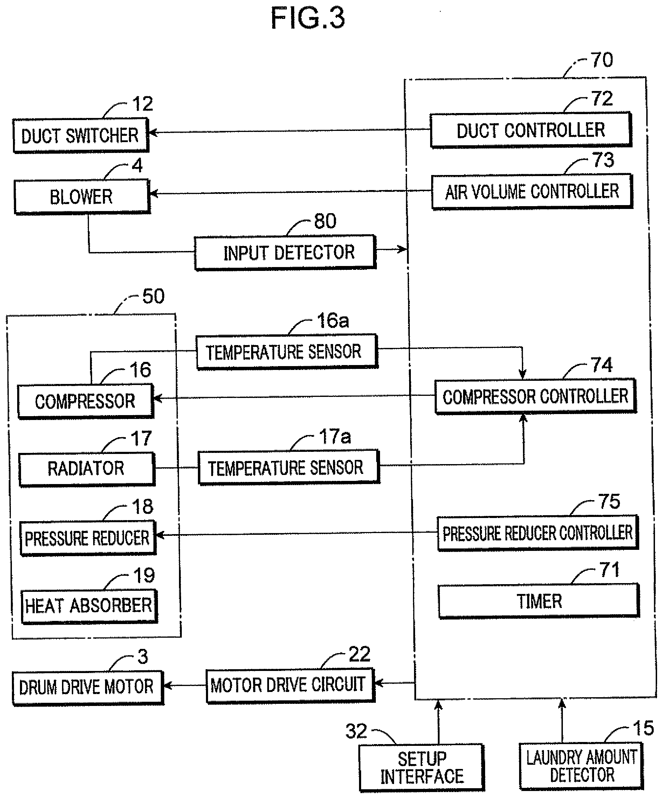

As shown in Fig. 3, the drum-type washer dryer includes a controller 70. The controller 70 controls a series of operations such as washing, rinsing, spin-drying and drying based on setting information, which is input by the user via a setup interface 32, and monitored operational conditions of each component. For example, the controller 70 controls the rotation of the drum drive motor 3 via the motor drive circuit 22 and operations of the blower 4 and the heat pump device 50 in the drying process. The controller 70 also controls the duct switcher 12 to switch between the first and second ducts 9, 11. For example, the controller 70 may comprise a CPU (Central Processing Unit: not shown), a ROM (Read Only Memory), which stores programs, a RAM (Random Access Memory), which stores programs and data during execution of various processes, an I/O interface, and a bus, which connects these components to each other. The controller 70 includes a timer 71 for timekeeping the time from the start of the drying process. An internal timer, which is built in the controller 70 as internal operation functions, may be used as the timer 71. It should be noted that a timer device, which is separate from the controller 70, may be used as the timer 71.

The controller 70 comprises a duct controller 72, an air volume controller 73, a compressor controller 74 and a pressure reducer controller 75. The duct controller 72 controls the duct switcher 12 to selectively switch the duct between the first and second ducts 9, 11 during the drying process. The air volume controller 73 controls the blower 4 to adjust the dry air volume in the circulation duct 13. The compressor controller 74 controls the rotational speed of the compressor 16. The pressure reducer controller 75 adjusts the pressure reduction amount of the pressure reducer 18 (throttle amount of the expansion valve). For example, the duct controller 72, the air volume controller 73, the compressor controller 74 and the pressure reducer controller 75 may be the CPU executing operational programs stored in the ROM of the controller 70.

The air volume controller 73 controls the blower 4 so that a large volume of the dry air at lower speed is blown from the first outlet 8 into the drum 1 under selection of the first duct 9 than the second duct 11 and so that the dry air is blown from the second outlet 10 at higher velocity under the selection of the second duct 11 than the first duct 9.

The compressor controller 74 changes the rotational speed of the compressor 16 based on a fluctuation in the dry air volume in the circulation duct 13. Specifically, the compressor controller 74 decreases the rotational speed of the compressor 16 if the dry air volume decreases in the circulation duct 13. The compressor controller 74 increases the rotational speed of the compressor 16 if the dry air volume increases in the circulation duct 13.

The pressure reducer controller 75 changes the pressure reduction amount of the pressure reducer 18 based on a fluctuation in the rotational speed of the compressor 16. Specifically, the pressure reducer controller 75 increases the pressure reduction amount of the pressure reducer 18 with the decrease in the rotational speed of the compressor 16. The pressure reducer controller 75 decreases the pressure reducer amount of the pressure reducer 18 with the increase in the rotational speed of the compressor 16.

Operations, works and effects of the aforementioned drum-type washer dryer are described in detail.

Operation of the heat pump device 50 is explained at first. The compressor 16 compresses the refrigerant so that the refrigerant becomes high temperature and high pressure. The refrigerant then enters the radiator 17 to exchange heat with circumambient air (dry air passing through the circulation duct 13) so that the air is heated. Meanwhile, the refrigerant is cooled and becomes liquefied. The pressure of the liquefied refrigerant is reduced by the pressure reducer 18 so that the liquid refrigerant becomes low temperature and low pressure. Thereafter, the refrigerant enters the heat absorber 19 to exchange heat with circumambient air (dry air passing through the circulation duct 13), so that the air is dehumidified and cooled. Meanwhile, the refrigerant is heated and becomes steam. The refrigerant then returns to the compressor 16.

The dry air is blown out from the blower 4 and enters the drum 1 through the water tub 2. The dry air then dries the laundry in the drum 1, so that the dry air turns into very humid air. The humid air enters the heat pump device 50. In the heat pump device 50, the dry air is dehumidified and cooled in the heat absorber 19 at first. Subsequently, the dry air flows into and is heated by the radiator 17, so that the dry air becomes high-temperature/low-humidity air. The air then returns to the blower 4.

In the drying process by means of the aforementioned heat pump device 50, the compressor controller 74 decreases the rotational speed of the compressor 16 if a temperature detected by the temperature sensor 16a, which is mounted on the discharge pipe of the compressor 16, exceeds a prescribed value. Thus, it becomes less likely that the lubricant oil in the compressor 16 is degraded. A condensing temperature of the refrigerant in the radiator 17 is detected by the temperature sensor 17a. If the temperature detected by the temperature sensor 17a is lower than a prescribed value, the rotational speed of the compressor 16 is increased under control of the compressor controller 74. On the other hand, if the temperature detected by the temperature sensor 17a is higher than the prescribed value, the rotational speed of the compressor 16 is decreased under the control of the compressor controller 74. Alternatively, an air temperature may be detected at the outlet of the radiator 17 by the temperature sensor 17a. If the temperature detected by the temperature sensor 17a is lower than the prescribed value, the rotational speed of the compressor 16 is increased under the control of the compressor controller. On the other hand, if the temperature detected by the temperature sensor 17a is higher than the prescribed value, the rotational speed of the compressor 16 is decreased under the control of the compressor controller 74. The aforementioned rotational speed control to the compressor 16 performed by the compressor controller 74 is not based on a fluctuation in the dry air volume passing through the circulation duct 13. The compressor controller 74 controls the rotational speed of the compressor 16 even if the dry air volume is consistent.

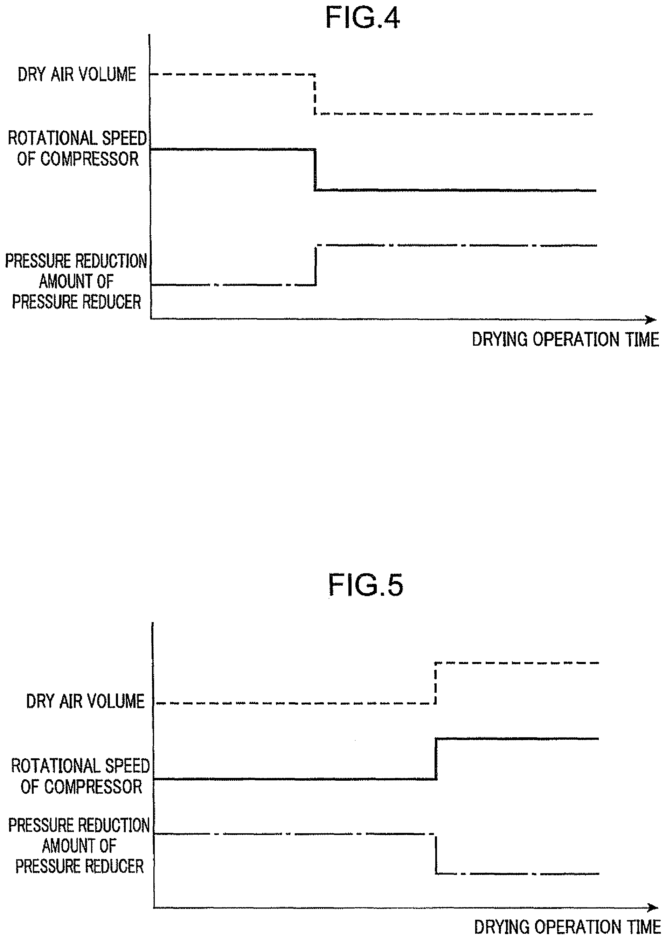

With regard to the drum-type washer dryer of this embodiment, the rotational speed of the compressor 16 is also changed based on a fluctuation in the dry air volume in the circulation duct 13 under the control of the compressor controller 74. This control is described with reference to Figs. 4 and 5.

Fig. 4 shows the rotational speed control to the compressor 16 by the compressor controller 74 under a rapid decrease in the dry air volume in the circulation duct 13. Fig. 4 also shows the pressure reduction amount control of the pressure reducer 18 by the pressure reducer controller 75.

The following cases are exemplified as the decrease in the dry air volume in the circulation duct 13 during the drying process. In short, laundry is facilitated to dry by a large volume of wind from the first duct 9 because a large amount of moisture is contained in the laundry at the beginning of the drying process. The blower 4, however, consumes a lot of power to continuously cause a large volume of the wind. Therefore, the dry air volume is decreased in order to perform the energy saving operation if the drying process advances to a certain extent. In this case, the dry air volume in the circulation duct 13 drastically decreases at the switching timing to the energy saving operation.

The duct switching operation from the first duct 9 to the second duct 11 is also exemplified as the decrease in the dry air volume during the drying process. In short, if the dry air is blown to the laundry at high pressure and high velocity from the second duct 11, it becomes less likely that the laundry wrinkles. If the dry air at high pressure and high velocity is generated from the early drying process, it is necessary to drive and rotate the blower 4 at high speed, which results in increased power consumption. Thus, the first duct 9 is used to blow a large volume of the dry air, which comes into contact with the laundry, and facilitate to dry the laundry during the early drying process. The air blowing path is switched from the first duct to the second duct in order to blow a small volume of the dry air at high pressure and high velocity, which comes into contact with the laundry and reduces the wrinkles on the laundry during the late drying process in which it becomes likely that the laundry wrinkles. In this case, the dry air volume drastically decreases in the circulation duct 13 at the switching timing from the first duct 9 to the second duct 11.

As described above, if the dry air volume drastically decreases in the circulation duct 13, the heat exchange amount between the heat absorber 19 situated in the circulation duct 13 and the dry air also drastically decrease. Consequently, the refrigerant may not be completely vaporized in the heat absorber 19. Accordingly, the liquid refrigerant may be compressed by the compressor 16 as the next stage, which may potentially lead to malfunction of the compressor 16. As shown in Fig. 4, the rotational speed of the compressor 16 is decreased in conjunction with the decrease in the dry air volume in the circulation duct 13 under the control of the compressor controller 74 according to this embodiment. If the rotational speed of the compressor 16 is decreased as described above, the circulation amount of the refrigerant is reduced in the heat pump device 50. In short, the circulation amount of the refrigerant is reduced based on the decrease in the dry air volume, which results in decreased heat exchange amount with the dry air in the heat absorber 19 (i.e., the circulation amount of the refrigerant is reduced so as to decrease the heat exchange amount of the refrigerant based on the decrease in the heat exchange amount of the dry air resulting from the decrease of air volume). The refrigerant may be completely vaporized at the exit side of the heat absorber 19 even if the dry air volume decreases. Thus, it becomes less likely the compressor 16 compresses the liquid refrigerant and breaks down. Accordingly, the heat pump device 50 becomes reliable.

As shown in Fig. 4, the pressure reduction amount of the pressure reducer 18 (throttle amount of the expansion valve) is increased with the decrease in the rotational speed of the compressor 16 under the control of the pressure reducer controller 75 according to this embodiment. If the rotational speed of the compressor 16 decreases, the pressure of the refrigerant goes down at the high pressure-side (side of the radiator 17) of the heat pump device 50 whereas the pressure of the refrigerant goes up at the low pressure-side (side of the heat absorber 19) of the heat pump device 50. In this case, since the temperature of the refrigerant rises at the low pressure-side, the dehumidification performance of the heat absorber 19 slightly becomes worse. Thus, as a result of increasing the pressure reduction amount of the pressure reducer 18 with the decrease in the rotational speed of the compressor 16, it becomes less likely that the pressure of the refrigerant increases in the heat absorber 19. Accordingly, the heat absorber 19 may maintain the dehumidification performance. If the pressure reduction amount of the pressure reducer 18 increases, it becomes less likely that the pressure of the refrigerant decreases at the high pressure side (side of the radiator 17). Accordingly, the radiator 17 may also maintain the heating performance.

As a result of increasing the pressure reduction amount of the pressure reducer 18 (throttle amount of the expansion valve), the circulation amount of the refrigerant may further decrease in the heat pump device 50. Thus, as a result of the combined control between the compressor controller 74, which decreases the rotational speed of the compressor 16, and the pressure reducer controller 75, which increases the pressure reduction amount of the pressure reducer 18, the circulation amount of the refrigerant may be reduced in a wider range to keep up with a large change in the dry air volume.

Fig. 5 shows the rotational speed control of the compressor 16 by the compressor controller 74 under a rapid increase in the dry air volume in the circulation duct 13. Fig. 5 also shows the pressure reduction amount control of the pressure reducer 18 by the pressure reducer controller 75.

The following cases are exemplified as an increase in the dry air volume in the circulation duct 13 during the drying process. In short, if there are not two ducts as shown in Fig. 1 but there is only one duct, an increase in the rotational speed of the blower 4 is required to cause a large volume of the dry air at high velocity, which comes into contact with laundry to reduce wrinkles on the laundry as described above. In this case, a lot of power is consumed if a large volume of the dry air is blown at high velocity from the early drying process. Thus, the rotational speed of the blower 4 is increased in the late drying process, during which it becomes likely that the laundry wrinkles, to cause a large volume of the dry air at high velocity, which comes into contact with the laundry to reduce wrinkles on the laundry. In this case, the dry air volume drastically increases in the circulation duct 13 at the timing of increasing the rotational speed of the blower 4.

If there are two ducts as shown in Fig. 1, the switching operation from the second duct 11 to first duct 9 is also exemplified as an increase in the dry air volume during the drying process. If the drying process advances so that the laundry contains little moisture, it becomes likely that bonding between fibers is too strong for a mechanical force to bend the fibers and cause wrinkles. Thus, the second duct 11 is used to cause a small volume of the dry air at high velocity, which comes into contact with the laundry to decrease wrinkles on the laundry, while the laundry tends to wrinkle. If the drying process thereafter advances and reaches the final phase of the drying process during which it becomes less likely that the laundry wrinkles, the blowing path of the dry air is switched to the first duct 9 so that a large volume of the dry air at low velocity comes into contact with the laundry. Accordingly, the drying time becomes shortened, which results in decreased power consumption. In this case, the dry air volume drastically increases in the circulation duct 13 at the switching timing from the second duct 11 to the first duct 9.

As described above, if the dry air volume drastically increases in the circulation duct 13, the heat exchange amount between the heat absorber 19 situated in the circulation duct 13 and the dry air also drastically increases. Consequently, the refrigerant is excessively heated at the exit of the heat absorber 19, so that the compressor 16 stops if the temperature of the refrigerant discharged from the compressor 16 exceeds a prescribed value. Thus, as shown in Fig. 5, the rotational speed of the compressor 16 is increased based on an increased amount of the dry air volume once the dry air volume increases in the circulation duct 13 under the control of the compressor controller 74 according to this embodiment. If the rotational speed of the compressor 16 is increased as described above, the circulation amount of the refrigerant may go up in the heat pump device 50. In short, the circulation amount of the refrigerant is increased based on an increase in the dry air volume to exchange heat with the increased dry air in the heat absorber 19 (i.e., the circulation amount of the refrigerant is increased so as to increase the heat exchange amount of the refrigerant based on the increase in the heat exchange amount of the dry air resulting from the increase of air volume). Accordingly, it becomes less likely that the refrigerant is excessively heated at the exit side of the heat absorber 19 even if the dry air volume increases. Thus, the refrigerant discharged from the compressor 16 may be maintained within a prescribed value. Therefore, it becomes less likely that the compressor 16 problematically stops. Accordingly, the heat pump device 50 becomes reliable.

As shown in Fig. 5, the pressure reduction amount of the pressure reducer 18 (throttle amount of the expansion valve) is decreased with the increase in the rotational speed of the compressor 16 under the control of the pressure reducer controller 75 according to this embodiment. The pressure of the refrigerant may go down in the radiator to prevent the pressure of the refrigerant from exceeding a prescribed value. As a result of decreasing the pressure reduction amount of the pressure reducer 18, the circulation amount of the refrigerant may be further increased in the heat pump device 50. Thus, as a result of a combined control between the compressor controller, which increases the rotational speed of the compressor 16, and the pressure reducer controller 75, which decreases the pressure reduction amount of the pressure reducer 18, the circulation amount of the refrigerant may be increased in a wider control range to keep up with a large change in the dry air volume.

In the aforementioned control based on the dry air volume in the circulation duct 13, for example, a detection device such as a Venturi tube or Biram's van anemometer, which are capable of directly measuring the air velocity/air volume in the circulation duct 13, may be used to detect the dry air volume.

In this embodiment, an input detector 80 is used to detect the blower input which determines blowing performance of the blower (c.f., Fig. 3), so that the increase or decrease of the dry air volume is easily and inexpensively detected. In short, the compressor controller 74 of the controller 70 determines a fluctuation in the dry air volume flowing in the circulation duct 13 based on the blower input, which is detected by the input detector 80. A control signal (signal to determine the rotational speed of the blast fan motor 4b of the blower 4), which is input from the air volume controller 73 to the blower 4 may be used as the blower input, which determines the blowing performance. For example, with regard to only the first duct 9, if the blower input detected by the input detector 80 increases, the dry air volume passing through the first duct 9 goes up by the increase in the blower input. Thus, the increase or decrease of the air volume may be easily determined based on the blower input.

However, there is switching operation between ducts, which is different in air passage cross-sectional area, the air volume is not always increased by the increase in the blower input. In short, if the second duct 11 having the second outlet 10, which has a narrower cross-section to allow the air passage than the first outlet 8, is selectively used, the air volume may go down although the air becomes high velocity even if the blower input is greater under the selection of the second duct 11 than the first duct 9. In this case, the dry air volume may be calculated on the basis of the blower input detected by the input detector 80 in light of the known cross-sectional area of the currently selected one of the ducts to allow the air passage.

If a heat pump device is used in air conditioners and alike, the heat absorber and the radiator are separately installed as interior equipment and exterior equipment. Thus, with regard to the air conditioner and alike, the cyclic statuses of the heat absorber side and the radiator side may be easily detected even under a change in the air volume. Therefore, the standard control on the basis of temperature detection works well. On the other hand, if the heat pump device 50 is applied to a washer dryer (or laundry dryer), like this embodiment, the air passes through the radiator 17 just after the heat absorber 19 because the radiator 17 and the heat absorber 19 align with the air flow. In short, with regard to the heat pump device 50 which is used in a washer dryer or a laundry dryer, since the radiator 17 may be affected by the heat absorber 19, the response may be delayed under the aforementioned control on the basis of the temperature detection. Accordingly, the detection to the air volume change and the control to the rotational speed of the compressor based on the detection are required. As a result of adopting the control of this embodiment, the circulation amount of the refrigerant is promptly adjusted to keep up with the resultant fluctuation in the heat exchange amount between the heat absorber and the dry air from the fluctuation of the dry air volume. Therefore, it becomes less likely that the compressor breaks down or stops. Thus the washer dryer or the laudry dryer becomes very reliable.

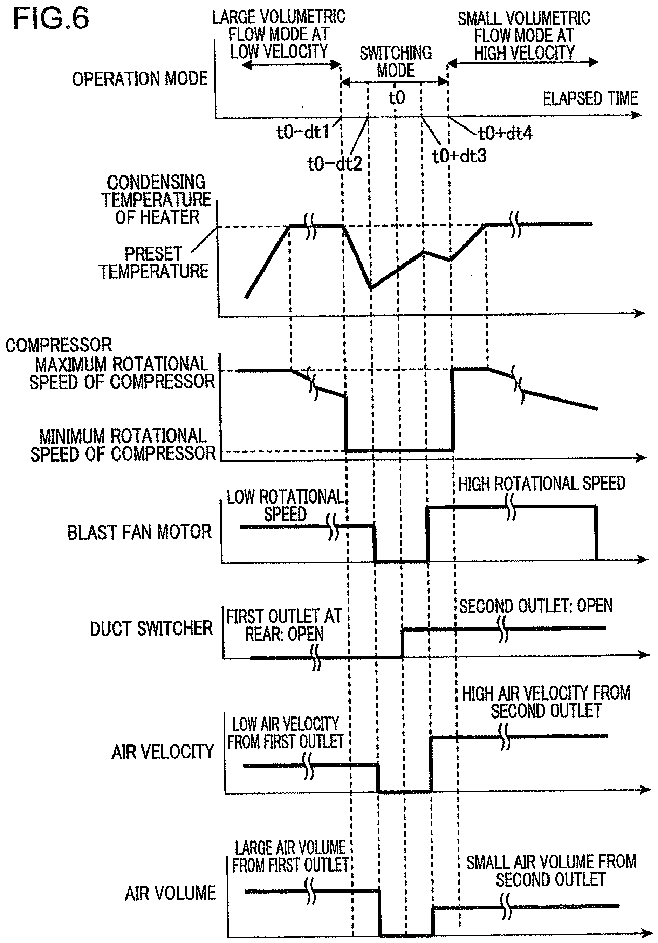

The duct switching operation during the drying process in the drum-type washer dryer according to this embodiment is described with reference to Fig. 6.

If the blower 4 blows a constant volume of the air before and after the operation of the duct switcher 12, a wind force working on the valve 12a of the duct switcher 12 becomes considerably large. Therefore, a drive motor has to have a large rotary torque to smoothly operate the duct switcher 12, which results in increased cost. Thus, in this embodiment, the blowing performance of the blower 4 is temporarily decreased (the blower may stop blowing the air) immediately before the operation of the duct switcher 12, so that the duct switcher 12 may be smoothly operated with an inexpensive configuration.

In a heat pump-type washer dryer (or laundry dryer), if the blowing performance of the blower 4 is temporarily decreased (or if the blower temporarily stops blowing the air), the pressure rapidly goes up at the high pressure-side of the heat pump device 50 even under short absence of the dry air flow through the circulation duct 13, so that the heater 7 (radiator 17) may be excessively heated up. Therefore, the compressor 16 is potentially broken down. Thus, in this embodiment, the rotational speed control timing of the compressor 16, the control timing of the blower 4 and the control timing of the duct switcher 12 are intentionally delayed as described below in order to surely avoid resultant malfunctions from the excessive temperature rise of the heater 7.

Fig. 6 is a time chart exemplifying the duct switching operation. As shown in Fig. 6, the duct switching operation is in a large volumetric flow mode at low velocity from the start of the drying process to time t0-dt1. Meanwhile, the first duct 9 having a large cross-sectional area which allows the air passage with small pressure loss is used to blow a large volume of the dry air from the first outlet 8 at the rear of the drum 1, so that the dry air comes into contact with the laundry. In short, the controller 70 controls the duct switcher 12 to open the first duct 9, and starts the drying operation. The controller 70 starts the timekeeping with the timer 71 in synchronization with starting the drying operation. The controller 70 maintains the large volumetric flow mode at low velocity up to time t0-dt1. It should be noted that t0 as the predetermined time is a parameter, which is variable based on the laundry amount detected by the laundry amount detector 15. It should be also noted that dt1, dt2, dt3 and dt4 are constant values of roughly several ten seconds, respectively. Since the pressure loss of the first duct 9 is small in the large volumetric flow mode at low velocity during the drying operation, a large volumetric air flow may be obtained by a relatively low rotational speed of the blast fan motor 4b, so that the blower 4 is driven with low power consumption. Thus, the drying time, which is allocated as the early drying period, are shortened, which results in decreased power consumption during the early drying period. During the large volumetric flow mode at low velocity, the rotational speed of the compressor 16 is controlled by the compressor controller 74 so that a temperature detected by the temperature sensor 17a, which is used to detect a condensing temperature of the refrigerant in the radiator 17, becomes a preset temperature.

Subsequently, the drying process moves into the switching mode from time t0-dt1 to t0+dt4. At time t0-dt1, the compressor controller 74 temporarily decreases the rotational speed of the compressor 16. In this example, the rotational speed of the compressor 16 is set to the minimum rotational speed so as to largely decrease the condensing temperature of the refrigerant in the radiator 17. Thereafter, at time t0-dt2, the air volume controller 73 temporarily decreases the blowing performance of the blower 4. In this example, the rotational speed of the blast fan motor 4b is set to zero so as to temporarily stop blowing the air. Since the compressor 16 operates at the minimum rotational speed, the increase in the condensing temperature of the refrigerant in the radiator 17 becomes minimal. Thereafter, at time t0 as the predetermined time, the duct controller 72 operates the duct switcher 12 to switch the second duct 11 opened. Since the blower 4 stops blowing the air, no wind force works on the duct switcher 12, so that the valve 12a may be smoothly driven with a small rotary torque. Since the duct switcher 12 is driven while the air blow is stopped, the switching operation may become smooth. Therefore, the duct switching operation causes little sound, which results in effective noise prevention.

Thereafter, at time t0+dt3, the air volume controller 73 rotates the blast fan motor 4b at high rotational speed so as to increase the temporarily decreased (stopped) blowing performance of the blower 4 to a set value. Thereafter, at time t0+dt4, the compressor controller 74 returns to the temporarily decreased rotational speed of the compressor 16 to a set value, so that the condensing temperature of the refrigerant in the radiator 17 becomes a preset temperature. Therefore, it becomes less likely that the heater 7 (radiator 17) causes an excessive temperature rise immediately after the duct switching operation.

After time t0+dt4, the drying process moves into a small volumetric flow mode at high velocity. The dry air at high pressure and high velocity is blown by the blast fan motor 4b, which rotates at high speed, from the second outlet 10 having a narrower cross-sectional area to allow the air passage than the first outlet 8. In this case, since the laundry is consistently stretched by the dry air at high pressure and high velocity, the wrinkles may be reduced.

As described above, before the duct controller 72 changes the duct during the drying process, the compressor controller 74 temporarily decreases the rotational speed of the compressor 16 (e.g., by setting the compressor 16 to the minimum rotational speed). Therefore, the heating performance of the heater 7 temporarily goes down. The air volume controller 73 then temporarily decreases the blowing performance of the blower 4 (e.g., by setting the rotational speed of the blast fan motor 4b to zero to temporarily stop blowing the air). The duct controller 72 thereafter operates the duct switcher 12 to switch the duct. Accordingly, it becomes less likely that an excessive temperature rise of the heater at the duct switching operation causes malfunction of the heat pump device 50. Since the valve 12a is operated under low wind force working on the valve 12a of the duct switcher 12, a motor does not have to cause a great rotary torque to the duct switcher 12, which results in cost reduction.

After the duct controller 72 operates the duct switcher 12 to change the duct, the air volume controller 73 returns the temporarily decreased (stopped) rotational speed of the blast fan motor 4b to a set value. The compressor controller 74 then returns the temporarily decreased rotational speed of the compressor 16 to a set value. Therefore, it becomes less likely that an excessive temperature rise of the heater 7 (radiator 17) or the compressor 16 immediately after the duct switching operation causes malfunctions.

The heat pump device 50 comprises the compressor 16, which is driven by the compressor controller 74, the radiator 17 (heater 7), the pressure reducer 18 and the heat absorber 19 (dehumidifier 6). If the rotational speed of the compressor 16 is varied, the radiator 17 (heater 7) varies the heating performance, which results in a greater heating performance with less power consumption than if an electric heater is used as the heater. Thus, less power is consumed and the drying time is shortened.

The compressor controller 74 is used to drive the compressor 16. The compressor controller 74 decreases the performance of the compressor 16 to the minimum without stopping the compressor 16. The air volume controller 73 then temporarily decreases the blowing performance of the blower 4. The duct controller 72 thereafter operates the duct switcher 12 to switch the duct. The drying time is not extended more than is necessary because the compressor 16 does not stop. There is surely no excessive temperature rise at the heater 7 (radiator 17) and the compressor 16.

The first duct 9 defines the first outlet 8, which has an enlarged cross-sectional area to allow passage of a large volume of air at low velocity blown from the rear of the drum 1. The second duct 11 defines the second outlet, which has a narrowed cross-sectional area to allow passage of a small volume of air at high velocity blown from the front of the drum 1. The drying process execution may be separated into a process of drying the laundry with low power consumption and a process of consistently moving the laundry by means of the wind at high velocity to stretch fibers and make wrinkles unfixed on the laundry, based on progress of drying the laundry and a condition of wrinkle fixation during the drying process from the start to finish of the drying operation. In short, while wrinkles are easily fixated on the laundry, wind is blown out at high pressure and high velocity to effectively and strongly stretch the laundry and decrease wrinkles if the wind comes into contact with the laundry. During the remaining period, a large volume of the wind is blown from the first outlet 8 of the first duct 9. Accordingly, the switching operation between the first and second ducts 9, 11 during the drying process effectively decreases wrinkle formation by means of the single blower 4. The total power consumption of the blast fan motor 4b may be reduced since during the drying process there is a blowing period of a large volume of the air, which consumes less power than the air at high velocity. Accordingly, the drum-type washer dryer of this embodiment may cause favorable end results of the drying process with minimal wrinkles on laundry and power saving.

The exhaust outlet 5 is closer to the second outlet 10 at the front of the drum 1 and farther from the first outlet 8. Since the exhaust outlet 5 is situated at the front side of the drum 1, a distance between the first outlet 8 and the exhaust outlet 5 becomes long, so that the air blown from the first outlet 8 at the rear of the drum 1 is widely spread inside the drum 1. Thus, the dry air efficiently comes into contact with the laundry in the drum 1, so that the laundry may be dried with low power consumption.

The dry air may reach the rear from the front of the drum 1 even though the exhaust outlet 5 is closer to the second outlet 10 because the dry air is blown from the second outlet 10 at high pressure and high velocity. The contact between the dry air and the laundry may not be weakened so much under such a configuration. Therefore, the dry air at high pressure and high velocity still effectively stretches the wrinkles.

In the drying process, the first duct 9, which has a large cross-sectional area to allow the air passage with small pressure loss, is used during the first half of the drying process from the start of the drying operation to when a predetermined time passes. A large volume of the dry air is blown out from the first outlet 8 at the rear of the drum 1 to come into contact with the laundry. In this case, since the pressure loss of the first duct 9 is small, a large volume of the air wind is obtained by relatively low rotational speed of the blast fan motor 4b of the blower 4 driven with relatively low power consumption. Thus, the drying time, which is allocated as the early drying period, becomes short and the power consumption is decreased during the early drying period.

In the latter half of the drying process after the predetermined time passes from the start of the drying operation, the duct switcher 12 switches to the second duct 11 and increases the rotational speed of the blast fan motor 4b. Consequently, in the latter half of the drying process, the dry air at high pressure and high velocity is blown out by the blast fan motor 4b rotating at high rotational speed from the second outlet 10, which has a narrower cross-sectional area to allow the air passage than the first outlet 8. In this case, since the laundry is consistently stretched by the drying wind at high pressure and high velocity, the wrinkles are reduced.

A laundry amount detector 15 may be preferably used to set the predetermined time for the controller 70 to separate the first half from the latter half of drying based on the laundry amount. If there is a large laundry amount, the drying time becomes longer. Therefore, it is necessary to extend the predetermined time. Likewise, if the laundry amount is small, the drying time becomes shorter. Therefore, it is necessary to shorten the predetermined time. If it is optimized to allocate the first and latter halves of the drying process to match a drying progress speed which depends on the aforementioned laundry amount, the total power consumption is reduced in comparison to usage of the dry air which is consistently blown out at high pressure and high velocity. Thus, favorable end results of the drying process are obtained with minimal wrinkles on the laundry.

With regard to the operation of the laundry amount detector 15, the laundry amount detector 15 detects the laundry amount (mass) placed in the drum 1 before starting the washing process as described below. Specifically, the laundry amount detector 15 detects the amount of the laundry placed in the drum 1 on the basis of a difference between a shaft position of the damper 14 when the water tub 2 is empty (i.e., there is no water in the water tub 2 and no laundry is placed in the drum 1) and a shaft position of the damper 14 before the start of the washing process to supply water into the water tub 2 (i.e. there is no water in the water tub 2 while the laundry is placed in the drum 1).

The vertical displacement of the shaft of the damper 14 is exemplarily detected by the laundry amount detector 15 but the present embodiment is not limited thereto. For example, the laundry amount detector may detect changes in parameters such as load, rotational speed, drive current, torque or alike of the drum drive motor 3 to identify the laundry amount in the drum 1 from the variance of the load of the drum drive motor 3.

The exemplary controller 70 automatically adjusts the predetermined time, which is used to separate the first half from the latter half of the drying process, based on the detection results of the laundry amount detector 15 in this embodiment. Even without the laundry amount detector 15, the user may input the laundry amount to the setup interface 32, so that the controller 70 changes the predetermined time based on the user input.

As described above, the laundry dryer according to one aspect of the present invention comprises a storage portion which stores laundry to be dried; a heat pump device including a pipeline connecting a compressor, which compresses refrigerant, a radiator, a pressure reducer, which reduces the pressure of the refrigerant after heat emission at the radiator, and a heat absorber, so that the pipeline allows sequential circulation of the refrigerant through the compressor, the radiator, the pressure reducer and the heat absorber; a circulation duct in which a blower is situated to blow dry air so that the dry air sequentially circulates from the storage portion and passes through the heat absorber and the radiator to the storage portion again; an air volume controller which controls the blower to adjust a dry air volume in the circulation duct; and a compressor controller which controls a rotational speed of the compressor, wherein the compressor controller changes the rotational speed of the compressor based on a fluctuation in the dry air volume in the circulation duct.

If the heat pump device is applied to the laundry dryer according to the aforementioned configuration, the storage portion, the heat absorber and the radiator are situated along the circulation duct. The dry air passed through the heat absorber immediately goes through the radiator. In short, unlike a heat pump device of air conditioners or alike in which the heat absorber and the radiator are separated as interior equipment and exterior equipment, the heat absorber and the radiator are displaced on the same circulation duct. Accordingly, their heat exchange conditions based on the air-blowing environment around the equipment are not separated from each other. Therefore, they are subjected to the same environment. In such a configuration, if the dry air volume in the circulation duct drastically changes, the heat exchange amount between the heat absorber situated in the circulation duct and the dry air also drastically changes. A standard control to the compressor, which directly detects a temperature of the refrigerant, may not keep up with the rapid change in the heat exchange amount, which results in malfunction or halt of the compressor. Thus, with the present invention, the rotational speed of the compressor is changed based on a fluctuation in the dry air volume in the circulation duct under the control of the compressor controller. Thus, the rotational speed of the compressor may be promptly controlled to keep up with the fluctuation in the dry air volume to prevent the malfunction or halt of the compressor. Therefore, the laundry dryer becomes very reliable.

Preferably, the aforementioned compressor controller decreases the rotational speed of the compressor if the dry air volume decreases in the circulation duct.

In the aforementioned configuration, if the dry air volume drastically decreases in the circulation duct, the heat exchange amount between the heat absorber situated in the circulation duct and the dry air may also drastically decrease. Consequently, since the refrigerant may not be completely vaporized in the heat absorber, the liquid refrigerant may be compressed by the compressor. Therefore, there is a potential risk of breaking the compressor down. Thus, the rotational speed of the compressor is decreased in conjunction with a decrease in the dry air volume in the circulation duct under the control of the compressor controller of the present invention. If the rotational speed of the compressor is decreased as described above, the circulation amount of the refrigerant decreases in the heat pump device. In short, the circulation amount of the refrigerant is reduced based on the decreased dry air volume, which results in the decreased heat exchange amount with the dry air in the heat absorber. The refrigerant may be completely vaporized at the exit side of the heat absorber even if the dry air volume decreases. Thus, the compressor may compress the liquid refrigerant without malfunctioning to enhance the reliability.

Preferably, the aforementioned compressor controller increases the rotational speed of the compressor if the dry air volume increases in the circulation duct.

In the aforementioned configuration, if the dry air volume drastically increases in the circulation duct, the heat exchange amount between the heat absorber situated in the circulation duct and the dry air may also drastically increase. Consequently, the refrigerant becomes too hot at the exit of the heat absorber. The compressor may stop if the temperature of the refrigerant discharged from the compressor exceeds a prescribed value. Thus, the rotational speed of the compressor is increased, in conjunction with the increase in the dry air volume in the circulation duct, under the control of the compressor controller of the present invention. If the rotational speed of the compressor is increased as described above, the circulation amount of the refrigerant increases in the heat pump device. In short, the circulation amount of the refrigerant is increased based on the increased dry air volume, so that the heat exchange amount with the dry air goes up in the heat absorber. Therefore, it becomes less likely that the refrigerant becomes excessively high temperature at the exit side of the heat absorber even if the dry air volume increases. Thus, the temperature of the refrigerant discharged from the compressor may be kept within a prescribed value. Accordingly, it becomes likely that the compressor avoids the halt. Thus, the reliability is enhanced.

In the aforementioned configuration, preferably, the laundry dryer further comprises ducts used as a part of the circulation duct, the ducts having outlets, respectively, from which the dry air is blown into the storage portion; a duct switcher which selectively switches between the ducts; and a duct controller which controls the duct switcher to switch between the ducts during a drying process, wherein the compressor controller temporarily decreases the rotational speed of the compressor before the duct controller switches between the ducts during the drying process, and then the air volume controller temporarily decreases blowing performance of the blower, and thereafter the duct controller operates the duct switcher to switch between the ducts.

According to the aforementioned configuration, since the compressor controller temporarily decreases the rotational speed of the compressor at first before the duct controller changes the duct during the drying process, it becomes less likely that an excessive temperature rise of the radiator at the duct switching operation causes malfunction of the heat pump device. Since the blowing performance of the blower is then temporarily decreased, the duct switcher is operated under a wind low force working on the duct switcher. Consequently, a large power source is not required for driving the duct switcher, which results in power saving and cost reduction. Since the duct is smoothly switched with minimal power, the duct may be quietly operated, which results in noise reduction.

In the aforementioned configuration, preferably, the laundry dryer further comprises a first duct including a first outlet; a second duct including a second outlet which has a narrower cross-sectional area to allow air passage than the first outlet; a duct switcher which selectively switches between the first and second ducts; and a duct controller which controls the duct switcher to switch between the ducts during the drying process, wherein the air volume controller controls the blower so that a larger volume of the dry air is blown into the storage portion at lower velocity under selection of the first duct than the second duct and so that the dry air is blown into the storage portion at higher velocity under the selection of the second duct than the first duct, wherein the compressor controller temporarily decreases the rotational speed of the compressor before the duct controller switches between the ducts during the drying process, and then the air volume controller temporarily decreases blowing performance of the blower, and thereafter the duct controller operates the duct switcher to switch between the ducts.

According to the aforementioned configuration, two ducts; namely, the first and second ducts, are provided as the ducts, through which the dry air is blown into the storage portion that stores the laundry. These two ducts may be switched by the duct switcher. The first outlet of the first duct has a wider cross-sectional area to allow the air passage with less pressure loss than the second outlet of the second duct. A larger volume of the dry air is blown from the first outlet into the storage portion under the selection of the first duct than the second duct. In this case, since the pressure loss of the first duct is small, a large volume of the dry air is obtained by the blower which is driven with relatively low power consumption. Thus, the drying time with a large volume of the air is shortened to decrease the power consumption. The second outlet of the second duct has a smaller cross-sectional area to allow the air passage cross-section than the first outlet. The dry air is blown from the second outlet at higher pressure and higher velocity under the selection of the second duct than the first duct. In this case, since the laundry is consistently stretched by the dry wind at high pressure and high velocity, the wrinkles are reduced.

In the aforementioned configuration, preferably, the temporarily decreased blowing performance of the blower by the air volume controller is increased to a set value after the duct controller operates the duct switcher to switch between the ducts, and then the temporarily decreased rotational speed of the compressor by the compressor controller is increased to a set value.

As described above, since the blowing performance of the blower, which is temporarily decreased immediately after the duct change, is increased to a set value before the temporarily decreased rotational speed of the compressor is increased to a set value, it becomes less likely that the excessive temperature rise immediately after the duct change breaks the radiator or the compressor down.

Preferably, the compressor controller minimizes compressing performance without stopping the compressor while the rotational speed of the compressor is temporarily decreased. Accordingly, the drying time is not extended than is necessary. An excessive temperature rise is surely prevented at the radiator and the compressor.

In the aforementioned configuration, preferably, the laundry dryer further comprises a pressure reducer controller which controls the pressure reducer, wherein the pressure reducer controller increases a pressure reduction amount of the pressure reducer with a decrease in the rotational speed of the compressor.

If the rotational speed of the compressor decreases in the aforementioned instance, the pressure of the refrigerant decreases at the high pressure-side (radiator-side) of the heat pump device and increases at the low pressure-side (heat absorber-side). In this case, since the temperature of the refrigerant goes up at the low pressure-side, the dehumidification performance of the heat absorber slightly becomes worse. Thus, as a result of the increased pressure reduction amount of the pressure reducer with the decrease in the rotational speed of the compressor, it becomes less likely that the pressure of the refrigerant goes up in the heat absorber. Therefore, the heat absorber may maintain the dehumidification performance. If the pressure reduction amount of the pressure reducer is increased, it becomes less likely that the pressure of the refrigerant goes down at the high pressure-side (radiator-side). Therefore, the radiator may also maintain the heating performance. As a result of the increased pressure reduction amount of the pressure reducer, the circulation amount of the refrigerant may further decrease in the heat pump device. Thus, as a result of a combined control between the compressor controller, which decreases the rotational speed of the compressor, and the pressure reducer controller which increases the pressure reduction amount of the pressure reducer, the reduction in the circulation amount of the refrigerant may be controlled in a wider control range even under a considerably large change in the dry air volume.

Preferably, the aforementioned pressure reducer controller decreases the pressure reduction amount of the pressure reducer with an increase in the rotational speed of the compressor, so that the pressure of the refrigerant decreases in the radiator. Therefore, the pressure of the refrigerant is prevented from exceeding a prescribed value. As a result of the decreased pressure reduction amount of the pressure reducer, the circulation amount of the refrigerant further goes up in the heat pump device. Thus, as a result of a combined control between the compressor controller, which increases the rotational speed of the compressor, and the pressure reducer controller, which decreases the pressure reduction amount of the pressure reducer, the increase in the circulation amount of the refrigerant may be controlled in a wider control range even under a considerably large change in the dry air volume.

In the aforementioned configuration, preferably, the pressure reducer is an electric expansion valve. The adjustment to the throttle amount of the expansion valve facilitates a change in the pressure reduction amount.

In the aforementioned configuration, preferably, the laundry dryer further comprises an input detector which detects a blower input to determine the blowing performance of the blower, wherein the compressor controller determines the fluctuation in the dry air volume in the circulation duct to control the rotational speed of the compressor, based on an increase or decrease of the blower input detected by the input detector. Therefore, the increase or decrease of the air volume may be easily detected without direct measurement to the dry air volume in the circulation duct. Thus, the reliability is inexpensively enhanced.

The washer dryer according to the present invention includes any one of the aforementioned laundry dryers, and a water tub which contains the storage portion. The washer tub stores wash water. As a result of applying any one of the aforementioned laundry dryers, the washer dryer becomes very reliable.

### (Embodiment 2)

Embodiment 2 of the present invention is described in detail with reference to the drawings.

Since the basic configuration of the drum-type washer dryer according to Embodiment 2 is the same as the drum-type washer dryer shown in Fig. 1, the same reference numerals are given to the common components, and the explanation thereof is omitted as appropriately.

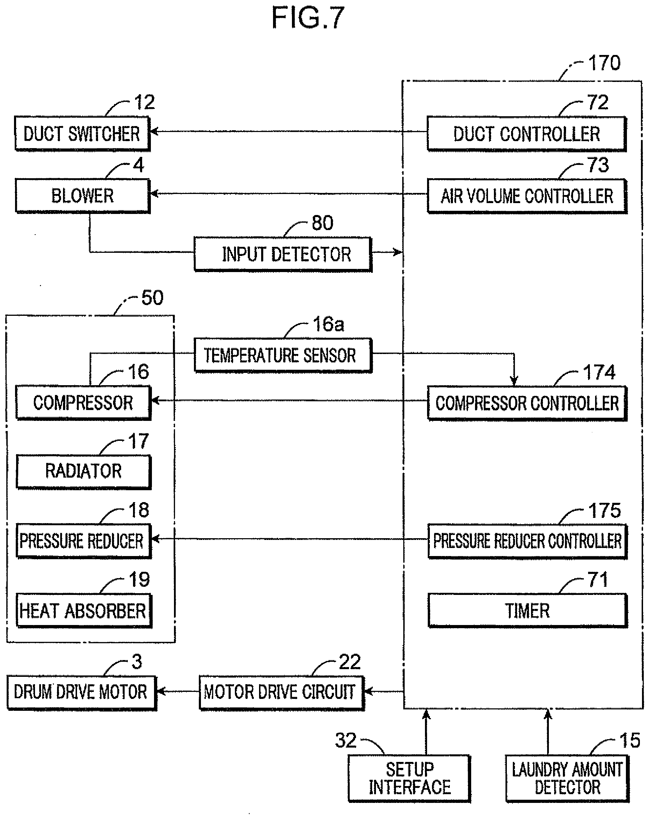

As shown in Fig. 7, the drum-type washer dryer of this embodiment includes a controller 170. Like the drum-type washer dryer according to Embodiment 1, the controller 170 controls a series of operations such as washing, rinsing, spin-drying and drying based on setting information, which is input by the user via a setup interface 32, and monitored operational conditions of each component. For example, the controller 170 controls the rotation of the drum drive motor 3 via the motor drive circuit 22 and operations of the blower 4 and the heat pump device 50 in the drying process. The controller 170 also controls the duct switcher 12 to switch between the first and second ducts 9, 11. For example, the controller 170 may comprise a CPU (Central Processing Unit: not shown), a ROM (Read Only Memory), which stores programs, a RAM (Random Access Memory), which stores programs and data during execution of various processes, an I/O interface, and a bus, which connects these components to each other. The controller 170 includes a timer 71 for timekeeping the time from the start of the drying process. An internal timer, which is built in the controller 170 as internal operation functions, may be used as the timer 71. It should be noted that a timer device, which is separate from the controller 170, may be used as the timer 71.

The controller 170 comprises a duct controller 72, an air volume controller 73, a compressor controller 174 and a pressure reducer controller 175. The duct controller 72 controls the duct switcher 12 to selectively switch the duct between the first and second ducts 9, 11 during the drying process. The air volume controller 73 controls the blower 4 to adjust the dry air volume in the circulation duct 13. The compressor controller 174 controls operation and stop of the compressor 16 which operates at a constant speed (rotational speed). The pressure reducer controller 175 adjusts the pressure reduction amount of the pressure reducer 18 (throttle amount of the expansion valve). For example, the duct controller 72, the air volume controller 73, the compressor controller 174 and the pressure reducer controller 175 may be the CPU executing operational programs stored in the ROM of the controller 170.

The air volume controller 73 controls the blower 4 so that a large volume of the dry air at lower speed is blown from the first outlet 8 into the drum 1 under selection of the first duct 9 than the second duct 11 and so that the dry air is blown from the second outlet 10 at higher velocity under the selection of the second duct 11 than the first duct 9.

The pressure reducer controller 175 changes the throttle amount of the pressure reducer 18 based on a fluctuation in the dry air volume in the circulation duct 13. Specifically, the pressure reducer controller 175 increases the throttle amount of the pressure reducer 18 if the dry air volume decreases in the circulation duct 13. The pressure reducer controller 175 decreases the throttle amount of the pressure reducer 18 if the dry air volume increases in the circulation duct 13.

Operations, works and effects of the aforementioned drum-type washer dryer are described in detail.

Since the basic operation of the heat pump device 50 is the same as Embodiment 1, the explanation thereof is omitted.

The drying process using the heat pump device 50 according to this embodiment is described. The compressor controller 174 stops the compressor 16 to inhibit degradation of the lubricant oil in the compressor 16 if a temperature detected by the temperature sensor 16a, which is mounted on the discharge pipe of the compressor 16, exceeds a prescribed value. The compressor controller 174 activates the compressor 16 again if the detected temperature falls below the prescribed value. The compressor controller 174 identifies a degree of superheat on the basis of a difference between temperatures detected by a temperature sensor mounted on an exit pipe of the heat absorber 19 and a temperature sensor mounted on a pipe within the heat absorber 19. If the degree of superheat becomes no more than a prescribed value, the compressor controller 174 stops operating the compressor 16 and prevents liquid compression. The compressor controller 174 activates the compressor 16 once again if the degree of superheat exceeds the prescribed value.

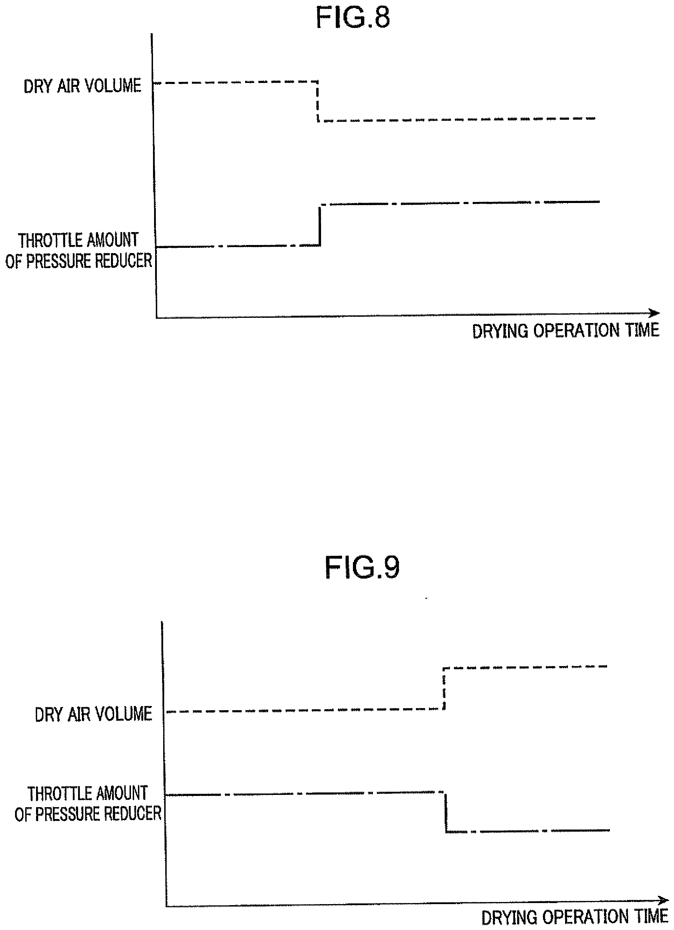

With regard to the drum-type washer dryer of this embodiment, the throttle amount of the pressure reducer 18 is changed based on a fluctuation in the dry air in the circulation duct under control of the pressure reducer controller 175. This control is described with reference to Figs. 8 and 9.

Fig. 8 shows the throttle amount control of the pressure reducer 18 by the pressure reducer controller 175 under a rapid decrease in the dry air volume in the circulation duct 13.

The following cases are exemplified as the decrease in the dry air volume in the circulation duct 13 during the drying process. In short, laundry is facilitated to dry by a large volume of wind from the first duct 9 because a large amount of moisture is contained in the laundry at the beginning of the drying process. The blower 4, however, consumes a lot of power to continuously cause a large volume of the wind. Therefore, the dry air volume is decreased in order to perform the energy saving operation if the drying process advances to a certain extent. In this case, the dry air volume in the circulation duct 13 drastically decreases at the switching timing to the energy saving operation.

The duct switching operation from the first duct 9 to the second duct 11 is also exemplified as a decrease in the decrease in the dry air volume during the drying process. In short, if the dry air is blown to the laundry at high pressure and high velocity from the second duct 11, it becomes less likely that the laundry wrinkles. If the dry air at high pressure and high velocity is generated from the early drying process, it is necessary to drive and rotate the blower 4 at high speed, which results in increased power consumption. Thus, the first duct 9 is used to blow a large volume of the dry air, which comes into contact with the laundry, and facilitate to dry the laundry during the early drying process. The air blowing path is switched from the first duct to the second duct in order to blow a small volume of the dry air at high pressure and high velocity, which comes into contact with the laundry and reduces the wrinkles on the laundry during the late drying process in which it becomes likely that the laundry wrinkles. In this case, the dry air volume drastically decreases in the circulation duct 13 at the switching timing from the first duct 9 to the second duct 11.

As described above, if the dry air volume drastically decreases in the circulation duct 13, the heat exchange amount between the heat absorber 19 situated in the circulation duct 13 and the dry air also drastically decrease. Consequently, the refrigerant may not be completely vaporized in the heat absorber 19. Accordingly, the liquid refrigerant may be compressed by the compressor 16 as the next stage, which may potentially lead to malfunction of the compressor 16. As shown in Fig. 8, the throttle amount of the pressure reducer 18 is proportionally increased in conjunction with the decrease in the dry air volume in the circulation duct 13 under the control of the compressor controller 74 according to this embodiment. If the throttle amount of the compressor 18 is increased as described above, the circulation amount of the refrigerant is reduced in the heat pump device 50. In short, the circulation amount of the refrigerant is reduced based on the decrease in the dry air volume, which results in decreased heat exchange amount with the dry air in the heat absorber 19 (i.e., the circulation amount of the refrigerant is reduced so as to decrease the heat exchange amount of the refrigerant based on the decrease in the heat exchange amount of the dry air resulting from the decrease of air volume). The refrigerant may be completely vaporized at the exit side of the heat absorber 19 even if the dry air volume decreases. Thus, it becomes less likely the compressor 16 compresses the liquid refrigerant and breaks down. Accordingly, the washer dryer (or laundry dryer) using the heat pump device 50 becomes reliable. Since dehumidification is continuously performed without stopping the compressor 16 due to the improved reliability, the drying operation time becomes shortened. As a result of increasing the throttle amount of the pressure reducer 18, the circulation amount of the refrigerant goes up whereas the pressure of the refrigerant goes down at the heat absorber 19, so that the heat absorber 19 may maintain the dehumidification performance.

Fig. 9 shows the throttle amount control of the pressure reducer 18 by the pressure reducer controller 175 under a rapid increase in the dry air volume in the circulation duct 13.

The following cases are exemplified as an increase in the dry air volume in the circulation duct 13 during the drying process. In short, if there are not two ducts as shown in Fig. 1 but there is only one duct, an increase in the rotational speed of the blower 4 is required to cause a large volume of the dry air at high velocity, which comes into contact with laundry to reduce wrinkles on the laundry as described above. In this case, a lot of power is consumed if a large volume of the dry air is blown at high velocity from the early drying process. Thus, the rotational speed of the blower 4 is increased in the late drying process, during which it becomes likely that the laundry wrinkles, to cause a large volume of the dry air at high velocity, which comes into contact with the laundry to reduce wrinkles on the laundry. In this case, the dry air volume drastically increases in the circulation duct 13 at the timing of increasing the rotational speed of the blower 4.

If there are two ducts as shown in Fig. 1, the switching operation from the second duct 11 to first duct 9 is also exemplified as an increase in the dry air volume during the drying process. If the drying process advances so that the laundry contains little moisture, it becomes likely that bonding between fibers is too strong for a mechanical force to bend the fibers and cause wrinkles. Thus, the second duct 11 is used to cause a small volume of the dry air at high velocity, which comes into contact with the laundry to decrease wrinkles on the laundry, while the laundry tends to wrinkle. If the drying process thereafter advances and reaches the final phase of the drying process during which it becomes less likely that the laundry wrinkles, the blowing path of the dry air is switched to the first duct 9 so that a large volume of the dry air at low velocity comes into contact with the laundry. Accordingly, the drying time becomes shortened, which results in decreased power consumption. In this case, the dry air volume drastically increases in the circulation duct 13 at the switching timing from the second duct 11 to the first duct 9.

As described above, if the dry air volume drastically increases in the circulation duct 13, the heat exchange amount between the heat absorber 19 situated in the circulation duct 13 and the dry air also drastically increases. Consequently, the refrigerant is excessively heated at the exit of the heat absorber 19, so that the compressor 16 stops if the temperature of the refrigerant discharged from the compressor 16 exceeds a prescribed value. Thus, as shown in Fig. 9, the throttle amount of the pressure reducer 18 is increased based on an increased amount of the dry air volume once the dry air volume increases in the circulation duct 13 under the control of the pressure reducer controller 175 according to this embodiment. If the throttle amount of the pressure reducer 18 is decreased as described above, the circulation amount of the refrigerant may go up in the heat pump device 50. In short, the circulation amount of the refrigerant is increased based on an increase in the dry air volume to exchange heat with the increased dry air in the heat absorber 19 (i.e., the circulation amount of the refrigerant is increased so as to increase the heat exchange amount of the refrigerant based on the increase in the heat exchange amount of the dry air resulting from the increase of air volume). Accordingly, it becomes less likely that the refrigerant is excessively heated at the exit side of the heat absorber 19 even if the dry air volume increases. Thus, the refrigerant discharged from the compressor 16 may be maintained within a prescribed value. Therefore, it becomes less likely that the compressor 16 problematically stops. Accordingly, the washer dryer (or laundry dryer) using the heat pump device 50 becomes reliable. Since dehumidification is continuously performed without stopping the compressor 16 due to the improved reliability, the drying operation time becomes shortened. As a result of decreasing the throttle amount of the pressure reducer 18, the circulation amount of the refrigerant goes up whereas the pressure of the refrigerant goes down at the heat absorber 19 not to exceed the prescribed value in the radiator 17.

In the aforementioned control based on the dry air volume in the circulation duct 13, for example, a detection device such as a Venturi tube or Biram's van anemometer, which are capable of directly measuring the air velocity/air volume in the circulation duct 13, may be used to detect the dry air volume.

In this embodiment, an input detector 80 is used to detect the blower input which determines blowing performance of the blower (c.f., Fig. 7), so that the increase or decrease of the dry air volume is easily and inexpensively detected. In short, the pressure reducer controller 175 of the controller 170 determines a fluctuation in the dry air volume flowing in the circulation duct 13 based on the blower input, which is detected by the input detector 80. A control signal (signal to determine the rotational speed of the blast fan motor 4b of the blower 4), which is input from the air volume controller 73 to the blower 4 may be used as the blower input, which determines the blowing performance. For example, with regard to only the first duct 9, if the blower input detected by the input detector 80 increases, the dry air volume passing through the first duct 9 goes up by the increase in the blower input. Thus, the increase or decrease of the air volume may be easily determined based on the blower input.

However, there is duct switching operation between ducts which is different in cross-sectional area which allows air passage, the air volume is not always increased by the increase in the blower input. In short, if the second duct 11 having the second outlet 10, which has a narrower cross-section to allow the air passage than the first outlet 8, is selectively used, the air volume may go down although the air becomes high velocity even if the blower input is greater under the selection of the second duct 11 than the first duct 9. In this case, the dry air volume may be calculated on the basis of the blower input detected by the input detector 80 in light of the known cross-sectional area of the currently selected one of the ducts to allow the air passage.

If a heat pump device is used in air conditioners and alike, the heat absorber and the radiator are separately installed as interior equipment and exterior equipment. Thus, with regard to the air conditioner and alike, the cyclic statuses of the heat absorber side and the radiator side may be easily detected even under a change in the air volume. Therefore, the standard control on the basis of temperature detection works well. On the other hand, if the heat pump device 50 is applied to a washer dryer (or laundry dryer), like this embodiment, the air passes through the radiator 17 just after the heat absorber 19 because the radiator 17 and the heat absorber 19 align with the air flow. In short, with regard to the heat pump device 50 which is used in a washer dryer or a laundry dryer, since the radiator 17 may be affected by the heat absorber 19, the response may be delayed under the aforementioned control on the basis of the temperature detection. Accordingly, the detection to the air volume change and the control to the throttle amount of the pressure reducer based on the detection are required. As a result of adopting the control of this embodiment, the circulation amount of the refrigerant is promptly adjusted to keep up with the resultant fluctuation in the heat exchange amount between the heat absorber and the dry air from the fluctuation of the dry air volume. Therefore, it becomes likely that the compressor breaks down or stops. Thus the washer dryer or the laudry dryer becomes very reliable.

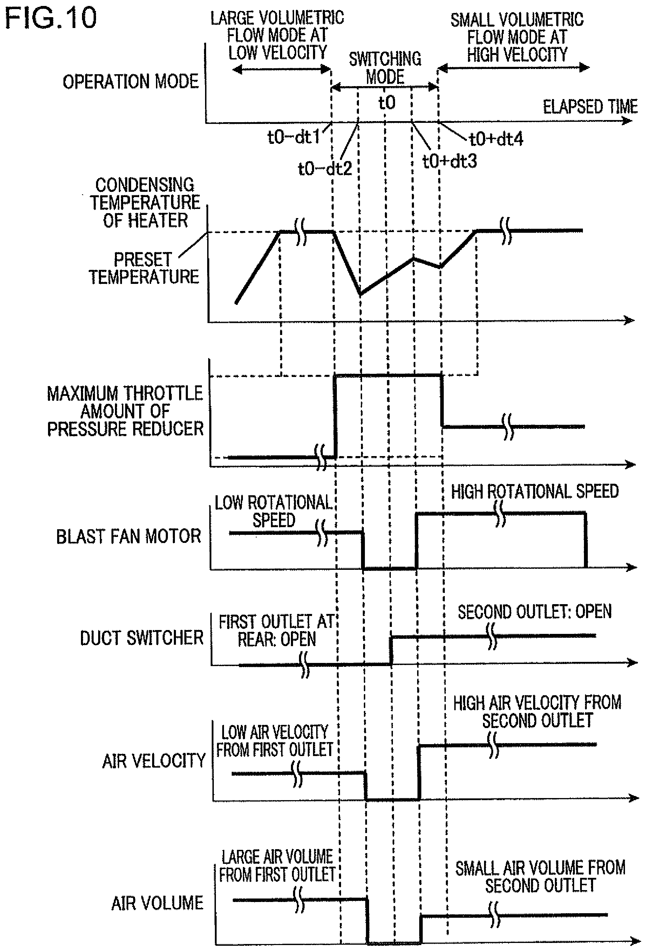

The duct switching operation during the drying process in the drum-type washer dryer according to this embodiment is described with reference to Fig. 10.

If the blower 4 blows a consistent volume of the air before and after the operation of the duct switcher 12, a wind force working on the valve 12a of the duct switcher 12 becomes considerably large. Therefore, a drive motor has to have a large rotary torque to smoothly operate the duct switcher 12, which results in increased cost. Thus, in this embodiment, the blowing performance of the blower 4 is temporarily decreased (the blower may stop blowing the air) immediately before the operation of the duct switcher 12, so that the duct switcher 12 may be smoothly operated with an inexpensive configuration.

In a heat pump-type washer dryer (or laundry dryer), if the blowing performance of the blower 4 is temporarily decreased (or if the blower temporarily stops blowing the air), the pressure rapidly goes up at the high pressure-side of the heat pump device 50 even under short absence of the dry air flow through the circulation duct 13, so that the heater 7 (radiator 17) may be excessively heated up. Therefore, the compressor 16 is potentially broken down. Thus, in this embodiment, the throttle amount control timing of the pressure reducer 18, the control timing of the blower 4 and the control timing of the duct switcher 12 are intentionally delayed as described below in order to surely avoid resultant malfunctions from the excessive temperature rise of the heater 7.

Fig. 10 is a time chart exemplifying the duct switching operation. As shown in Fig. 10, the duct switching operation is in a large volumetric flow mode at low velocity from the start of the drying process to time t0-dt1. Meanwhile, the first duct 9 having a large cross-sectional area which allows the air passage with small pressure loss is used to blow a large volume of the dry air from the first outlet 8 at the rear of the drum 1, so that the dry air comes into contact with the laundry. In short, the controller 170 controls the duct switcher 12 to open the first duct 9, and starts the drying operation. The controller 170 starts the timekeeping with the timer 71 in synchronization with starting the drying operation. The controller 170 maintains the large volumetric flow mode at low velocity up to time t0-dt1. It should be noted that t0 as the predetermined time is a parameter, which is variable based on the laundry amount detected by the laundry amount detector 15. It should be also noted that dt1, dt2, dt3 and dt4 are constant values of roughly several ten seconds, respectively. Since the pressure loss of the first duct 9 is small in the large volumetric flow mode at low velocity during the drying operation, a large volumetric air flow may be obtained by a relatively low rotational speed of the blast fan motor 4b, so that the blower 4 is driven with low power consumption. Thus, the drying time, which is allocated as the early drying period, are shortened, which results in decreased power consumption during the early drying period.

Subsequently, the drying process moves into the switching mode from time t0-dt1 to t0+dt4. At time t0-dt1, the pressure reducer controller 175 temporarily increases the throttle amount of the pressure reducer 18. In this example, the rotational speed of the compressor 16 is set to the maximum throttle amount so as to largely decrease the circulation amount and the condensing temperature of the refrigerant in the radiator 17. Thereafter, at time t0-dt2, the air volume controller 73 temporarily decreases the blowing performance of the blower 4. In this example, the rotational speed of the blast fan motor 4b is set to zero so as to temporarily stop blowing the air. Due to the maximized throttle amount of the pressure reducer 18, the increase in the condensing temperature of the refrigerant in the radiator 17 becomes minimal. Thereafter, at time t0 as the predetermined time, the duct controller 72 operates the duct switcher 12 to switch the second duct 11 opened. Since the blower 4 stops blowing the air, no wind force works on the duct switcher 12, so that the valve 12a may be smoothly driven with a small rotary torque.

Thereafter, at time t0+dt3, the air volume controller 73 rotates the blast fan motor 4b at high rotational speed so as to increase the temporarily decreased (stopped) blowing performance of the blower 4 to a set value. Thereafter, at time t0+dt4, the pressure reducer controller 175 returns to the temporarily increased throttle amount of the pressure reducer 18 to a set value, so that the condensing temperature of the refrigerant in the radiator 17 becomes a preset temperature. Therefore, it becomes less likely that the heater 7 (radiator 17) causes an excessive temperature rise immediately after the duct switching operation.

After time t0+dt4, the drying process moves into a small volumetric flow mode at high velocity. The dry air at high pressure and high velocity is blown by the blast fan motor 4b, which rotates at high speed, from the second outlet 10 having a narrower cross-sectional area to allow the air passage than the first outlet 8. In this case, since the laundry is consistently stretched by the dry air at high pressure and high velocity, the wrinkles may be reduced.

As described above, before the duct controller 72 changes the duct during the drying process, the pressure reducer controller 175 temporarily increases the throttle amount of the pressure reducer 18 (e.g., by setting the throttle amount of the pressure reducer 18 to the maximum). Therefore, the heating performance of the heater 7 temporarily goes down. The air volume controller 73 then temporarily decreases the blowing performance of the blower 4 (e.g., by setting the rotational speed of the blast fan motor 4b to zero to temporarily stop blowing the air). The duct controller 72 thereafter operates the duct switcher 12 to switch the duct. Accordingly, it becomes less likely that an excessive temperature rise of the heater at the duct switching operation causes malfunction of the heat pump device 50. Since the valve 12a is operated under low wind force working on the valve 12a of the duct switcher 12, a motor does not have to cause a great rotary torque to the duct switcher 12, which results in cost reduction.

After the duct controller 72 operates the duct switcher 12 to change the duct, the air volume controller 73 returns the temporarily decreased (stopped) rotational speed of the blast fan motor 4b to a set value. The pressure reducer controller 175 then returns the temporarily increased throttle amount of the pressure reducer 18 to a set value. Therefore, it becomes less likely that an excessive temperature rise of the heater 7 (radiator 17) or the compressor 16 immediately after the duct switching operation causes malfunctions.

The heat pump device 50 comprises the compressor 16, which is driven by the compressor controller 174, the radiator 17 (heater 7), the pressure reducer 18 and the heat absorber 19 (dehumidifier 6). If the throttle amount of the pressure reducer 18 is varied, the radiator 17 (heater 7) varies the heating performance, which results in a greater heating performance with less power consumption than if an electric heater is used as the heater. Thus, less power is consumed and the drying time is shortened.

The first duct 9 defines the first outlet 8, which has an enlarged cross-sectional area to allow passage of a large volume of air at low velocity blown from the rear of the drum 1. The second duct 11 defines the second outlet, which has a narrowed cross-sectional area to allow passage of a small volume of air at high velocity blown from the front of the drum 1. The drying process execution may be separated into a process of drying the laundry with low power consumption and a process of consistently moving the laundry by means of the wind at high velocity to stretch fibers and make wrinkles unfixed on the laundry, based on progress of drying the laundry and a condition of wrinkle fixation during the drying process from the start to finish of the drying operation. In short, while wrinkles are easily fixated on the laundry, wind is blown out at high pressure and high velocity to effectively and strongly stretch the laundry and decrease wrinkles if the wind comes into contact with the laundry. During the remaining period, a large volume of the wind is blown from the first outlet 8 of the first duct 9. Accordingly, the switching operation between the first and second ducts 9, 11 during the drying process effectively decrease wrinkle formation by means of the single blower 4. The total power consumption of the blast fan motor 4b may be reduced since during the drying process there is a blowing period of a large volume of the air, which consumes less power than the air at high velocity. Accordingly, the drum-type washer dryer of this embodiment may cause favorable end results of the drying process with minimal wrinkles on laundry and power saving.

The exhaust outlet 5 is closer to the second outlet 10 at the front of the drum 1 and farther from the first outlet 8. Since the exhaust outlet 5 is situated at the front side of the drum 1, a distance between the first outlet 8 and the exhaust outlet 5 becomes long, so that the air blown from the first outlet 8 at the rear of the drum 1 is widely spread inside the drum 1. Thus, the dry air efficiently comes into contact with the laundry in the drum 1, so that the laundry may be dried with low power consumption.

The dry air may reach the rear from the front of the drum 1 even though the exhaust outlet 5 is closer to the second outlet 10 because the dry air is blown from the second outlet 10 at high pressure and high velocity. The contact between the dry air and the laundry may not be weakened so much under such a configuration. Therefore, the dry air at high pressure and high velocity still effectively stretches the wrinkles.

In the drying process, the first duct 9, which has a large cross-sectional area to allow the air passage with small pressure loss, is used during the first half of the drying process from the start of the drying operation to when a predetermined time passes. A large volume of the dry air is blown out from the first outlet 8 at the rear of the drum 1 to come into contact with the laundry. In this case, since the pressure loss of the first duct 9 is small, a large volume of the air wind is obtained by relatively low rotational speed of the blast fan motor 4b of the blower 4 driven with relatively low power consumption. Thus, the drying time, which is allocated as the early drying period, becomes short and the power consumption is decreased during the early drying period.

In the latter half of the drying process after the predetermined time passes from the start of the drying operation, the duct switcher 12 switches to the second duct 11 and increases the rotational speed of the blast fan motor 4b. Consequently, in the latter half of the drying process, the dry air at high pressure and high velocity is blown out by the blast fan motor 4b rotating at high rotational speed from the second outlet 10, which has a narrower cross-sectional area to allow the air passage than the first outlet 8. In this case, since the laundry is consistently stretched by the drying wind at high pressure and high velocity, the wrinkles are reduced.

A laundry amount detector 15 may be preferably used to set the predetermined time for the controller 170 to separate the first half from the latter half of drying based on the laundry amount. If there is a large laundry amount, the drying time becomes longer. Therefore, it is necessary to extend the predetermined time. Likewise, if the laundry amount is small, the drying time becomes shorter. Therefore, it is necessary to shorten the predetermined time. If it is optimized to allocate the first and latter halves of the drying process to match a drying progress speed which depends on the aforementioned laundry amount, the total power consumption is reduced in comparison to usage of the dry air which is consistently blown out at high pressure and high velocity. Thus, favorable end results of the drying process are obtained with minimal wrinkles on the laundry.

With regard to the operation of the laundry amount detector 15, the laundry amount detector 15 detects the laundry amount (mass) placed in the drum 1 before starting the washing process as described below. Specifically, the laundry amount detector 15 detects the amount of the laundry placed in the drum 1 on the basis of a difference between a shaft position of the damper 14 when the water tub 2 is empty (i.e., there is no water in the water tub 2 and no laundry is placed in the drum 1) and a shaft position of the damper 14 before the start of the washing process to supply water into the water tub 2 (i.e. there is no water in the water tub 2 while the laundry is placed in the drum 1).

The vertical displacement of the shaft of the damper 14 is exemplarily detected by the laundry amount detector 15 but the present embodiment is not limited thereto. For example, the laundry amount detector may detect changes in parameters such as load, rotational speed, drive current, torque or alike of the drum drive motor 3 to identify the laundry amount in the drum 1 from the variance of the load of the drum drive motor 3.

The exemplary controller 170 automatically adjusts the predetermined time, which is used to separate the first half from the latter half of the drying process, based on the detection results of the laundry amount detector 15 in this embodiment. Even without the laundry amount detector 15, the user may input the laundry amount to the setup interface 32, so that the controller 170 changes the predetermined time based on the user input.

As described above, the laundry dryer according to another aspect of the present invention comprises a storage portion which stores laundry to be dried; a heat pump device including a pipeline connecting a compressor, which compresses refrigerant, a radiator, a pressure reducer, which reduces the pressure of the refrigerant after heat emission at the radiator, and a heat absorber, so that the pipeline allows sequential circulation of the refrigerant through the compressor, the radiator, the pressure reducer and the heat absorber; a circulation duct in which a blower is situated to blow dry air so that the dry air sequentially circulates from the storage portion and passes through the heat absorber and the radiator to the storage portion again; an air volume controller which controls the blower to adjust a dry air volume in the circulation duct; and a pressure reducer controller which controls a throttle amount of the pressure reducer, wherein the pressure reducer controller changes the throttle amount of the pressure reducer based on a fluctuation in the dry air volume in the circulation duct.

If the heat pump device is applied to the laundry dryer according to the aforementioned configuration, the storage portion, the heat absorber and the radiator are situated along the circulation duct. The dry air passed through the heat absorber immediately goes through the radiator. In short, unlike a heat pump device of air conditioners or alike in which the heat absorber and the radiator are separated as interior equipment and exterior equipment, the radiator may be directly affected by the heat absorber. In such a configuration, if the dry air volume in the circulation duct drastically changes, the heat exchange amount between the heat absorber situated in the circulation duct and the dry air may also drastically change. Therefore, a standard control to the compressor under temperature detection may not keep up with the rapid thermal change, which may result in malfunction or halt of the compressor. Thus, according to the present invention, the pressure reducer controller controls and changes the throttle amount of the pressure reducer based on the fluctuation in the dry air volume in the circulation duct. The aforementioned change in the throttle amount of the pressure reducer leads to adjustment of the refrigerant flow rate (the refrigerant circulation amount) in the heat pump device. Therefore, the adjustment of the refrigerant circulation amount may keep up with the change in the resultant heat exchange amount between the heat absorber and the dry air from the fluctuation in the dry air volume, to prevent the compressor from malfunctioning or stopping. Therefore, the laundry dryer becomes very reliable.

Preferably, the aforementioned pressure reducer controller increases the throttle amount of the pressure reducer if the dry air volume decreases in the circulation duct.

In the aforementioned configuration, if the dry air volume drastically decreases in the circulation duct, the heat exchange amount between the heat absorber situated in the circulation duct and the dry air may also drastically decrease. Consequently, since the refrigerant may not be completely vaporized in the heat absorber, the liquid refrigerant may be compressed by the compressor. Therefore, there is a potential risk of breaking the compressor down. Thus, the pressure reducer controller of the present invention controls and increases the throttle amount of the pressure reducer with the decrease of the dry air volume in the circulation duct. The aforementioned increase in the throttle amount of the pressure reducer may lead to reduction in the circulation amount of the refrigerant in the heat pump device. In short, the circulation amount of the refrigerant is reduced based on the decreased dry air volume, which results in the decreased heat exchange amount with the dry air in the heat absorber. The refrigerant may be completely vaporized at the exit side of the heat absorber even if the dry air volume decreases. Thus, the compressor may not compress the liquid refrigerant so that the compressor becomes very reliable and less likely to malfunction.

Preferably, the aforementioned pressure reducer controller decreases the throttle amount of the pressure reducer if the dry air volume increases in the circulation duct.

In the aforementioned configuration, if the dry air volume drastically increases in the circulation duct, the heat exchange amount between the heat absorber situated in the circulation duct and the dry air may also drastically increase. Consequently, the refrigerant becomes too hot at the exit of the heat absorber. The compressor may stop if the temperature of the refrigerant discharged from the compressor exceeds a prescribed value. Thus, the pressure reducer controller of the present invention controls and decreases the throttle amount of the pressure reducer with the increase in the dry air volume in the circulation duct. If the throttle amount of the pressure reducer is decreased as described above, the circulation amount of the refrigerant may increase in the heat pump device. In short, the circulation amount of the refrigerant is increased based on the increased dry air volume, so that the heat exchange amount with the dry air goes up in the heat absorber. Therefore, it becomes less likely that the refrigerant becomes excessively high temperature at the exit side of the heat absorber even if the dry air volume increases. Thus, the temperature of the refrigerant discharged from the compressor may be kept within a prescribed value. Accordingly, it becomes likely that the compressor avoids the halt. Thus, the reliability is enhanced.

In the aforementioned configuration, preferably, the laundry dryer further comprises a first duct including a first outlet; a second duct including a second outlet, which has a narrower cross-sectional area to allow air passage than the first outlet; a duct switcher which selectively switches between the first and second ducts; and a duct controller which controls the duct switcher to switch between the ducts during a drying process, wherein the air volume controller controls the blower so that a larger volume of the dry air is blown into the storage portion at lower velocity under selection of the first duct than the second duct and so that the dry air is blown into the storage portion at higher velocity under the selection of the second duct than the first duct, wherein the pressure reducer controller temporarily increases the throttle amount of the pressure reducer before the duct controller switches between the ducts during the drying process, and then the air volume controller temporarily decreases blowing performance of the blower, and thereafter the duct controller operates the duct switcher to switch between the ducts.

According to the aforementioned configuration, two ducts; namely, the first and second ducts, are provided as the ducts, through which the dry air is blown into the storage portion that stores the laundry. These two ducts may be switched by the duct switcher. The first outlet of the first duct has a wider cross-sectional area to allow the air passage with less pressure loss than the second outlet of the second duct. A larger volume of the dry air is blown from the first outlet into the storage portion under the selection of the first duct than the second duct. In this case, since the pressure loss of the first duct is small, a large volume of the dry air is obtained by the blower which is driven with relatively low power consumption. Thus, the drying time with a large volume of the air is shortened to decrease the power consumption. The second outlet of the second duct has a smaller cross-sectional area to allow the air passage cross-section than the first outlet. The dry air is blown from the second outlet at higher pressure and higher velocity under the selection of the second duct than the first duct. In this case, since the laundry is consistently stretched by the dry wind at high pressure and high velocity, the wrinkles are reduced.

Since the blowing performance of the blower is temporarily decreased before the duct controller changes the duct during the drying process, the duct controller may operate the duct switcher under a small wind force working on the duct switcher. Consequently, a large power source is not required for driving the duct switcher, which results in cost reduction.

Since the pressure reducer controller temporarily increases the throttle amount of the pressure reducer at first before the air volume controller temporarily decreases the blowing performance of the blower, the circulation amount of the refrigerant in the heat pump device decreases while the heat exchange amount in the radiator temporarily decreases (i.e., the heating performance temporarily decreases). Therefore, it becomes less likely that the excessive temperature rise of the radiator at the duct switching operation breaks the heat pump device down.

In the aforementioned configuration, preferably, the temporarily decreased blowing performance of the blower by the air volume controller is increased to a set value after the duct controller operates the duct switcher to switch between the ducts, and then the temporarily increased throttle amount of the pressure reducer by the pressure reducer controller is decreased to a set value.

As described above, since the blowing performance of the blower, which is temporarily decreased immediately after the duct change, is increased to a set value before the temporarily decreased throttle amount of the pressure reducer is increased to a set value, it becomes less likely that the excessive temperature rise immediately after the duct change breaks the radiator or the compressor down.

Preferably, the aforementioned pressure reducer controller changes a cross-sectional area which allows passage of the refrigerant to control the throttle amount. Therefore, the throttle amount of the pressure reducer may be easily controlled.

Preferably, the aforementioned pressure reducer controller reduces the cross-sectional area, which allows passage of the refrigerant, and increases the throttle amount in order to temporarily decrease a refrigerant flow. If the cross-sectional area of the pressure reducer to allow the refrigerant passage is decreased as described above, the circulation amount of the refrigerant may be easily and promptly decreased temporarily. Since the heating performance of the radiator is promptly and temporarily decreased before the air volume controller temporarily decreases the blowing performance of the blower, it becomes less likely that the excessive temperature rise of the radiator at the duct switching operation breaks the heat pump device down.

Preferably, the aforementioned pressure reducer is an electric expansion valve. Since the expansion valve allows electrical adjustment to the throttle amount, the throttle amount of the pressure reducer may be easily changed.

In the aforementioned configuration, preferably, the laundry dryer further comprises an input detector which detects a blower input to determine the blowing performance of the blower, wherein the pressure reducer controller determines the fluctuation in the dry air volume in the circulation duct to control the throttle amount of the pressure reducer, based on an increase or decrease of the blower input detected by the input detector. Therefore, the increase or decrease of the air volume may be easily detected without direct measurement to the dry air volume in the circulation duct. Thus, the reliability is inexpensively enhanced.

The washer dryer according to the present invention includes any one of the aforementioned laundry dryers, and a water tub which contains the storage portion. The washer tub stores wash water. As a result of applying any one of the aforementioned laundry dryers, the washer dryer becomes very reliable.

The drum-type washer dryer, which has the washing function as well as the laundry drying function, is explained in the aforementioned Embodiments 1 and 2 but the present invention is not limited thereto. The present invention may be applied to a laundry dryer without the washing function. It may be exemplified as the laundry dryer if the washing function is excluded from the drum-type washer dryer shown in Fig. 1. For example, the laundry dryer without the washing function does not require any connection of the water supply pipe or drain pipe 40 to the water tub 2 of Fig. 1. Thus, the water tube 2 may work as an outer shell of the drum 1 while other configurations of the drum-type washer dryer of Fig. 1 are kept the same.

The present invention is applied to the drum-type washer dryer in the aforementioned Embodiments 1 and 2 but the present invention is not limited to the drum-type washer dryer. In short, since the laundry dryer and the washer dryer of the present invention aim to enhance reliability of the heat pump device, shorten the drying period, and make the laundry dried with few wrinkles and with low power consumption, the present invention may be applied to hang-type drying or pulsator-type vertical washer dryers other than drum-type washer dryers.

Since the laundry dryer according to the aforementioned Embodiments 1 and 2 may attain high reliability even if the air volume is changed, the aforementioned Embodiments 1 and 2 may be applicable to a dehumidifier or alike.

### Industrial Applicability

The laundry dryer and washer dryer of the present invention may be suitably applied to various types of laundry dryer and washer dryers such as drum-type, hang dry-type or pulsator-type dryers.

## Claims

1. A laundry dryer, comprising:
a storage portion (1) which stores laundry to be dried;
a heat pump device (50) including a pipeline (20) connecting a compressor (16), which compresses refrigerant, a radiator (17), a pressure reducer (18), which reduces pressure of the pressurized refrigerant after heat emission at the radiator (17), and a heat absorber (19), so that the pipeline (20) allows sequential circulation of the refrigerant through the compressor (16), the radiator (17), the pressure reducer (18) and the heat absorber (19);
a circulation duct (13) in which a blower (4) is situated to blow dry air so that the dry air sequentially circulates from the storage portion (1) and passes through the heat absorber (19) and the radiator (17) to the storage portion (1) again;
an air volume controller (73) which controls the blower (4) to adjust a dry air volume in the circulation duct (13); and
a compressor controller (74, 174) which controls a rotational speed of the compressor (16), **characterized in that**
the compressor controller (74, 174) configured to change the rotational speed of the compressor (16) based on a fluctuation in the dry air volume in the circulation duct (13).

2. The laundry dryer according to claim 1, wherein
the compressor controller (74, 174) decreases the rotational speed of the compressor (16) if the dry air volume decreases in the circulation duct (13).

3. The laundry dryer according to claim 1 or 2, wherein
the compressor controller (74, 174) increases the rotational speed of the compressor (16) if the dry air volume increases in the circulation duct (13).

4. The laundry dryer according to any one of claims 1 to 3, further comprising:
ducts (9, 11) used as a part of the circulation duct (13), the ducts (9, 11) having outlets (8, 10), respectively, from which the dry air is blown into the storage portion (1);
a duct switcher (12) which selectively switches between the ducts (9, 11); and
a duct controller (72) which controls the duct switcher (12) to switch between the ducts (9, 11) during a drying process, wherein
the compressor controller (74, 174) temporarily decreases the rotational speed of the compressor (16) before the duct controller (72) switches between the ducts (9, 11) during the drying process, and then the air volume controller (73) temporarily decreases blowing performance of the blower (4), and thereafter the duct controller (72) operates the duct switcher (12) to switch between the ducts (9, 11).

5. The laundry dryer according to any one of claims 1 to 3, further comprising:
a first duct (9) including a first outlet (8);
a second duct (11) including a second outlet (10) which has a narrower cross-sectional area to allow air passage than the first outlet (8);
a duct switcher (12) which selectively switches between the first and second ducts (9, 11); and
a duct controller (72) which controls the duct switcher (12) to switch between the ducts (9, 11) during the drying process, wherein
the air volume controller (73) controls the blower (4) so that a larger volume of the dry air is blown into the storage portion (1) at lower velocity under selection of the first duct (9) than the second duct (11) and so that the dry air is blown into the storage portion (1) at higher velocity under the selection of the second duct (11) than the first duct (9), wherein
the compressor controller (74, 174) temporarily decreases the rotational speed of the compressor (16) before the duct controller (72) switches between the ducts (9, 11) during the drying process, and then the air volume controller (73) temporarily decreases blowing performance of the blower (4), and thereafter the duct controller (72) operates the duct switcher (12) to switch between the ducts (9, 11).

6. The laundry dryer according to claim 4 or 5, wherein
the temporarily decreased blowing performance of the blower (4) by the air volume controller (73) is increased to a set value after the duct controller (72) operates the duct switcher (12) to switch between the ducts (9, 11), and then the temporarily decreased rotational speed of the compressor (16) by the compressor controller (74, 174) is increased to a set value.

7. The laundry dryer according to any one of claims 4 to 6, wherein
the compressor controller (74, 174) minimizes compressing performance without stopping the compressor (16) while the rotational speed of the compressor (16) is temporarily decreased.

8. The laundry dryer according to any one of claims 1 to 7, further comprising a pressure reducer controller (75, 175) which controls the pressure reducer (18), wherein
the pressure reducer controller (75, 175) increases a pressure reduction amount of the pressure reducer (18) with a decrease in the rotational speed of the compressor (16).

9. The laundry dryer according to any one of claims 1 to 8, wherein
the pressure reducer controller (75, 175) decreases the pressure reduction amount of the pressure reducer (18) with an increase in the rotational speed of the compressor (16).

10. The laundry dryer according to any one of claims 1 to 9, further comprising an input detector (80) which detects a blower input to determine the blowing performance of the blower (4), wherein
the compressor controller (74, 174) determines the fluctuation in the dry air volume in the circulation duct (13) to control the rotational speed of the compressor (16), based on an increase or decrease of the blower input detected by the input detector (80).

11. A laundry dryer, comprising:
a storage portion (1) which stores laundry to be dried;
a heat pump device (50) including a pipeline (20) connecting a compressor (16), which compresses refrigerant, a radiator (17), a pressure reducer (18), which reduces pressure of the pressurized refrigerant after heat emission at the radiator (17), and a heat absorber (19), so that the pipeline (20) allows sequential circulation of the refrigerant through the compressor (16), the radiator (17), the pressure reducer (18) and the heat absorber (19);
a circulation duct (13) in which a blower (4) is situated to blow dry air so that the dry air sequentially circulates from the storage portion (1) and passes through the heat absorber (19) and the radiator (17) to the storage portion (1) again;
an air volume controller (73) which controls the blower (4) to adjust a dry air volume in the circulation duct (13); and
a pressure reducer controller (75, 175) which controls a throttle amount of the pressure reducer (18), **characterized in that**
the pressure reducer controller (75, 175) configured to change the throttle amount of the pressure reducer (18) based on a fluctuation in the dry air volume in the circulation duct (13).

12. The laundry dryer according to claim 11, wherein
the pressure reducer controller (75, 175) increases the throttle amount of the pressure reducer (18) if the dry air volume decreases in the circulation duct (13).

13. The laundry dryer according to claim 11 or 12, wherein
the pressure reducer controller (75, 175) decreases the throttle amount of the pressure reducer (18) if the dry air volume increases in the circulation duct (13).

14. The laundry dryer according to any one of claims 11 to 13, further comprising:
a first duct (9) including a first outlet (8);
a second duct (11) including a second outlet (10), which has a narrower cross-sectional area to allow air passage than the first outlet (8);
a duct switcher (12) which selectively switches between the first and second ducts (9, 11); and
a duct controller (72) which controls the duct switcher (12) to switch between the ducts (9, 11) during a drying process, wherein
the air volume controller (73) controls the blower (4) so that a larger volume of the dry air is blown into the storage portion (1) at lower velocity under selection of the first duct (9) than the second duct (11) and so that the dry air is blown into the storage portion (1) at higher velocity under the selection of the second duct (11) than the first duct (9), wherein
the pressure reducer controller (75, 175) temporarily increases the throttle amount of the pressure reducer (18) before the duct controller (72) switches between the ducts (9, 11) during the drying process, and then the air volume controller (73) temporarily decreases blowing performance of the blower (4), and thereafter the duct controller (72) operates the duct switcher (12) to switch between the ducts (9, 11).

15. The laundry dryer according to claim 14, wherein
the temporarily decreased blowing performance of the blower (4) by the air volume controller (73) is increased to a set value after the duct controller (72) operates the duct switcher (12) to switch between the ducts (9, 11), and then the temporarily increased throttle amount of the pressure reducer (18) by the pressure reducer controller (75, 175) is decreased to a set value.

16. The laundry dryer according to any one of claims 11 to 15, wherein
the pressure reducer controller (75, 175) changes a cross-sectional area, which allows passage of the refrigerant, in order to control the throttle amount.

17. The laundry dryer according to claim 14, wherein
the pressure reducer controller (75, 175) reduces the cross-sectional area, which allows passage of the refrigerant, and increases the throttle amount in order to temporarily decrease a refrigerant flow.

18. The laundry dryer according to any one of claims 11 to 17, further comprising an input detector (80) which detects a blower input to determine the blowing performance of the blower (4), wherein
the pressure reducer controller (75, 175) determines the fluctuation in the dry air volume in the circulation duct (13) to control the throttle amount of the pressure reducer (18), based on an increase or decrease of the blower input detected by the input detector (80).

19. The laundry dryer according to any one of claims 1 to 18, wherein
the pressure reducer (18) is an electric expansion valve.

20. A washer dryer comprising:
the laundry dryer according to any one of claims 1 to 19; and
a water tub (2) which contains the storage portion (1), the water tub (2) storing wash water.

## Patentansprüche

1. Wäschetrockner, umfassend:
einen Aufnahmeabschnitt (1), der zu trocknende Wäsche aufnimmt;
eine Wärmepumpenvorrichtung (50), umfassend eine Rohrleitung (20), die einen Kompressor (16), der ein Kältemittel komprimiert, eine Heizvorrichtung (17), einen Druckreduzierer (18), der den Druck des unter Druck stehenden Kältemittels nach der Wärmeabgabe an der Heizvorrichtung (17) reduziert, und eine Wärmeabsorbierungsvorrichtung (19) verbindet, sodass die Rohrleitung (20) eine sequentielle Zirkulation des Kältemittels durch den Kompressor (16), die Heizvorrichtung (17), den Druckreduzierer (18) und die Wärmeabsorbierungsvorrichtung (19) ermöglicht,
einen Zirkulationskanal (13), in dem ein Gebläse (4) positioniert ist, um trockene Luft zu blasen, sodass die trockene Luft sequentiell vom Aufnahmeabschnitt (1) zirkuliert und durch die Wärmeabsorbierungsvorrichtung (19) und die Heizvorrichtung (17) erneut zum Aufnahmeabschnitt (1) verläuft;
eine Luftvolumensteuerung (73), die das Gebläse (4) steuert, um ein trockenes Luftvolumen im Zirkulationskanal (13) anzupassen; und
eine Kompressorsteuerung (74, 174), die eine Drehgeschwindigkeit des Kompressors (16) steuert, **dadurch gekennzeichnet, dass**
die Kompressorsteuerung (74, 174) konfiguriert ist, die Drehgeschwindigkeit des Kompressors (16) beruhend auf einer Schwankung im trockenen Luftvolumen im Zirkulationskanal (13) zu ändern.

2. Wäschetrockner nach Anspruch 1, wobei
die Kompressorsteuerung (74, 174) die Drehgeschwindigkeit des Kompressors (16) senkt, wenn das trockene Luftvolumen im Zirkulationskanal (13) sinkt.

3. Wäschetrockner nach Anspruch 1 oder 2, wobei
die Kompressorsteuerung (74, 174) die Drehgeschwindigkeit des Kompressors (16) erhöht, wenn das trockene Luftvolumen im Zirkulationskanal (13) steigt.

4. Wäschetrockner nach einem der Ansprüche 1 bis 3, ferner umfassend:
Kanäle (9, 11), die als ein Teil des Zirkulationskanals (13) verwendet werden, wobei die Kanäle (9, 11) jeweils Auslasse (8, 10) aufweisen, von denen die trockene Luft in den Aufnahmeabschnitt (1) geblasen wird;
eine Kanalschaltvorrichtung (12), die selektiv zwischen den Kanälen (9, 11) schaltet; und
eine Kanalsteuerung (72), die die Kanalschaltvorrichtung (12) steuert, um während eines Trocknungsverfahrens zwischen den Kanälen (9, 11) zu schalten, wobei
die Kompressorsteuerung (74, 174) zeitweise die Drehgeschwindigkeit des Kompressors (16) senkt, bevor die Kanalsteuerung (72) während des Trocknungsverfahrens zwischen den Kanälen (9, 11) schaltet und wobei anschließend die Volumensteuerung (73) zeitweise die Blasleistung des Gebläses (4) senkt und im Anschluss daran die Kanalsteuerung (72) die Kanalschaltvorrichtung (12) bedient, um zwischen den Kanälen (9, 11) zu schalten.

5. Wäschetrockner nach einem der Ansprüche 1 bis 3, ferner umfassend:
einen ersten Kanal (9), einschließlich eines ersten Auslasses (8);
einen zweiten Kanal (11), einschließlich eines zweiten Auslasses (10), der einen schmaleren Querschnittsbereich zum Ermöglichen eines Luftdurchlasses aufweist als der erste Auslass (8);
eine Kanalschaltvorrichtung (12), die selektiv zwischen den ersten und zweiten Kanälen (9, 11) schaltet; und
eine Kanalsteuerung (72), die die Kanalschaltvorrichtung (12) steuert, um während des Trocknungsverfahrens zwischen den Kanälen (9, 11) zu schalten, wobei
die Luftvolumensteuerung (73) das Gebläse (4) steuert, sodass ein größeres Volumen der trockenen Luft bei einer geringeren Geschwindigkeit unter Auswahl des ersten Kanals (9) in den Aufnahmeabschnitt (1) geblasen wird als beim zweiten Kanal (11) und sodass die trockene Luft bei einer höheren Geschwindigkeit unter Auswahl des zweiten Kanals (11) in den Aufnahmeabschnitt (1) geblasen wird als beim ersten Kanal (9), wobei
die Kompressorsteuerung (74, 174) die Drehgeschwindigkeit des Kompressors (16) zeitweise senkt, bevor die Kanalsteuerung (72) währende des Trocknungsverfahrens zwischen den Kanälen (9, 11) schaltet und wobei anschließend die Volumensteuerung (73) zeitweise die Blasleistung des Gebläses (4) senkt und im Anschluss daran die Kanalsteuerung (72) die Kanalschaltvorrichtung (12) steuert, um zwischen den Kanälen (9, 11) zu schalten.

6. Wäschetrockner nach Anspruch 4 oder 5, wobei
die zeitweise gesenkte Blasleistung des Gebläses (4) durch die Luftvolumensteuerung (73) auf einen festgelegten Wert erhöht wird, nachdem die Kanalsteuerung (72) die Kanalschaltvorrichtung (12) steuert, um zwischen den Kanälen (9, 11) zu schalten und wobei anschließend die durch die Kompressorsteuerung (74, 174) gesenkte Drehgeschwindigkeit des Kompressors (16) auf einen festgelegten Wert erhöht wird.

7. Wäschetrockner nach einem der Ansprüche 4 bis 6, wobei
die Kompressorsteuerung (74, 174) die Komprimierleistung ohne das Anhalten des Kompressors (16) minimiert, während die Drehgeschwindigkeit des Kompressors (16) zeitweise gesenkt ist.

8. Wäschetrockner nach einem der Ansprüche 1 bis 7, ferner umfassend eine Druckreduzierungssteuerung (75, 175), die den Druckreduzierer (18) steuert, wobei
die Druckreduzierungssteuerung (75, 175) ein Druckreduzierungsmaß des Druckreduzierers (18) mit einer Senkung der Drehgeschwindigkeit des Kompressors (16) erhöht.

9. Wäschetrockner nach einem der Ansprüche 1 bis 8, wobei
die Druckreduzierungssteuerung (75, 175) das Druckreduzierungsmaß des Druckreduzierers (18) mit einer Erhöhung der Drehgeschwindigkeit des Kompressors (16) senkt.

10. Wäschetrockner nach einem der Ansprüche 1 bis 9, ferner umfassend einen Eingangsdetektor (80), der einen Gebläseeingang erfasst, um die Blasleistung des Gebläses (4) zu bestimmen, wobei
die Kompressorsteuerung (74, 174) die Schwankung im trockenen Luftvolumen im Zirkulationskanal (13) bestimmt, um die Drehgeschwindigkeit des Kompressors (16) zu steuern, beruhend auf einer Erhöhung oder Senkung des vom Eingangsdetektor (80) erfassten Gebläseeingangs.

11. Wäschetrockner, umfassend:
einen Aufnahmeabschnitt (1), der zu trocknende Wäsche aufnimmt;
eine Wärmepumpenvorrichtung (50), umfassend eine Rohrleitung (20), die einen Kompressor (16), der ein Kältemittel komprimiert, eine Heizvorrichtung (17), einen Druckreduzierer (18), der den Druck des unter Druck stehenden Kältemittels nach der Wärmeabgabe an der Heizvorrichtung (17) reduziert, und eine Wärmeabsorbierungsvorrichtung (19) verbindet, sodass die Rohrleitung (20) eine sequentielle Zirkulation des Kältemittels durch den Kompressor (16), die Heizvorrichtung (17), den Druckreduzierer (18) und die Wärmeabsorbierungsvorrichtung (19) ermöglicht;
einen Zirkulationskanal (13), in dem ein Gebläse (4) positioniert ist, um trockene Luft zu blasen, sodass die trockene Luft sequentiell vom Aufnahmeabschnitt (1) zirkuliert und durch die Wärmeabsorbierungsvorrichtung (19) und die Heizvorrichtung (17) erneut zum Aufnahmeabschnitt (1) verläuft;
eine Luftvolumensteuerung (73), die das Gebläse (4) steuert, um ein trockenes Luftvolumen im Zirkulationskanal (13) anzupassen; und
eine Druckreduzierungsteuerung (75, 175), die ein Drosselmaß des Druckreduzierers (18) steuert, **dadurch gekennzeichnet, dass**
die Druckreduzierungsteuerung (75, 175) konfiguriert ist, das Drosselmaß des Druckreduzierers (18) beruhend auf einer Schwankung im trockenen Luftvolumen im Zirkulationskanal (13) zu ändern.

12. Wäschetrockner nach Anspruch 11, wobei
die Druckreduzierungsteuerung (75, 175) das Drosselmaß des Druckreduzierers (18) erhöht, wenn das trockene Luftvolumen im Zirkulationskanal (13) sinkt.

13. Wäschetrockner nach Anspruch 11 oder 12, wobei
die Druckreduzierungsteuerung (75, 175) das Drosselmaß des Druckreduzierers (18) senkt, wenn das trockene Luftvolumen im Zirkulationskanal (13) steigt.

14. Wäschetrockner nach einem der Ansprüche 11 bis 13, ferner umfassend:
einen ersten Kanal (9), einschließlich eines ersten Auslasses (8);
einen zweiten Kanal (11), einschließlich eines zweiten Auslasses (10), der einen schmaleren Querschnittsbereich zum Ermöglichen eines Luftdurchlasses aufweist als der erste Auslass (8);
eine Kanalschaltvorrichtung (12), die selektiv zwischen den ersten und zweiten Kanälen (9, 11) schaltet; und
eine Kanalsteuerung (72), die die Kanalschaltvorrichtung (12) steuert, um während eines Trocknungsverfahrens zwischen den Kanälen (9, 11) zu schalten, wobei
die Luftvolumensteuerung (73) das Gebläse (4) steuert, sodass ein größeres Volumen der trockenen Luft bei einer geringeren Geschwindigkeit unter Auswahl des ersten Kanals (9) in den Aufnahmeabschnitt (1) geblasen wird als beim zweiten Kanal (11) und sodass die trockene Luft bei einer höheren Geschwindigkeit unter Auswahl des zweiten Kanals (11) in den Aufnahmeabschnitt (1) geblasen wird als beim ersten Kanal (9), wobei
die Druckreduzierungsteuerung (75, 175) zeitweise das Drosselmaß des Druckreduzierers (18) erhöht, bevor die Kanalsteuerung (72) während des Trocknungsverfahrens zwischen den Kanälen (9, 11) schaltet und wobei anschließend die Volumensteuerung (73) zeitweise die Blasleistung des Gebläses (4) senkt und im Anschluss daran die Kanalsteuerung (72) die Kanalschaltvorrichtung (12) steuert, um zwischen den Kanälen (9, 11) zu schalten.

15. Wäschetrockner nach Anspruch 14, wobei
die durch die Luftvolumensteuerung (73) zeitweise gesenkte Blasleistung des Gebläses (4) auf einen festgelegten Wert erhöht wird, nachdem die Kanalsteuerung (72) die Kanalschaltvorrichtung (12) steuert, um zwischen den Kanälen (9, 11) zu schalten und wobei anschließend das durch die Druckreduzierungssteuerung (75, 175) zeitweise erhöhte Drosselmaß des Druckreduzierers (18) auf einen festgelegten Wert gesenkt wird.

16. Wäschetrockner nach einem der Ansprüche 11 bis 15, wobei
die Druckreduzierungsteuerung (75, 175) einen Querschnittsbereich ändert, der einen Durchlauf des Kältemittels ermöglicht, um das Drosselmaß zu steuern.

17. Wäschetrockner nach Anspruch 14, wobei
die Druckreduzierungsteuerung (75, 175) den Querschnittsbereich reduziert, der einen Durchlauf des Kältemittels ermöglicht, und das Drosselmaß erhöht, um einen Kältemittelfluss zeitweise zu senken.

18. Wäschetrockner nach einem der Ansprüche 11 bis 17, ferner umfassend einen Eingangsdetektor (80), der einen Gebläseeingang erfasst, um die Blasleistung des Gebläses (4) zu bestimmen, wobei
die Druckreduzierungsteuerung (75, 175) die Schwankung im trockenen Luftvolumen im Zirkulationskanal (13) bestimmt, um das Drosselmaß des Druckreduzierers (18) zu steuern, beruhend auf einer Erhöhung oder Senkung des vom Eingangsdetektor (80) erfassten Gebläseeingangs.

19. Wäschetrockner nach einem der Ansprüche 1 bis 18, wobei
der Druckreduzierer (18) ein elektrisches Expansionsventil ist.

20. Wasch- und Trockenvorrichtung, umfassend:
den Wäschetrockner nach einem der Ansprüche 1 bis 19; und
eine Wasserwanne (2), die den Aufnahmeabschnitt (1) enthält, wobei die Wasserwanne (2) Waschwasser aufnimmt.

## Revendications

1. Sèche-linge, comprenant :
une partie de stockage (1) qui renferme du linge à sécher ;
un dispositif de pompe à chaleur (50) comprenant une canalisation (20) reliant un compresseur (16), qui comprime le réfrigérant, un radiateur (17), un réducteur de pression (18), qui réduit la pression du réfrigérant sous pression après une émission de chaleur au niveau du radiateur (17), et un absorbeur thermique (19), de manière que la canalisation (20) permette une circulation séquentielle du réfrigérant par le compresseur (16), le radiateur (17), le réducteur de pression (18) et l'absorbeur thermique (19) ;
un conduit de circulation (13) dans lequel une soufflante (4) est situé pour souffler de l'air de manière que l'air sec circule de manière séquentielle depuis la partie de stockage (1) en passant par l'absorbeur thermique (19) et le radiateur (17) jusqu'à la partie de stockage (1) à nouveau ;
un régulateur de volume d'air (73) qui régule la soufflante (4) pour ajuster un volume d'air sec dans le conduit de circulation (13) ; et
un dispositif de commande de compresseur (74, 174) qui commande une vitesse de rotation du compresseur (16), **caractérisé en ce que**
le dispositif de commande de compresseur (74, 174) est conçu pour modifier la vitesse de rotation du compresseur (16) en fonction d'une fluctuation du volume d'air sec dans le conduit de circulation (13).

2. Sèche-linge selon la revendication 1, dans lequel
le dispositif de commande de compresseur (74, 174) réduit la vitesse de rotation du compresseur (16) si le volume d'air sec diminue dans le conduit de circulation (13).

3. Sèche-linge selon la revendication 1 ou 2, dans lequel
le dispositif de commande de compresseur (74, 174) augmente la vitesse de rotation du compresseur (16) si le volume d'air sec augmente dans le conduit de circulation (13).

4. Sèche-linge selon l'une quelconque des revendications 1 à 3, comprenant en outre :
des conduits (9, 11) utilisés en tant que partie du conduit de circulation (13), les conduits (9, 11) présentant des sorties (8, 10), respectivement, depuis lesquelles l'air sec est soufflé dans la partie de stockage (1) ;
un commutateur de conduit (12) qui commute de manière sélective entre les conduits (9, 11) ; et
un dispositif de commande de conduit (72) qui commande le commutateur de conduit (12) pour commuter entre les conduits (9, 11) pendant le processus de séchage,
le dispositif de commande de compresseur (74, 174) réduisant temporairement la vitesse de rotation du compresseur (16) avant que le dispositif de commande de conduit (72) ne commute entre les conduits (9, 11) pendant le processus de séchage, et puis le régulateur de volume d'air (73) réduisant temporairement la performance en soufflage de la soufflante (4) et ensuite le dispositif de commande de conduit (72) actionnant le commutateur de conduit (12) pour commuter entre les conduits (9, 11).

5. Sèche-linge selon l'une quelconque des revendications 1 à 3, comprenant en outre :
un premier conduit (9) comportant une première sortie (8) ;
un deuxième conduit (11) comportant une deuxième sortie (10) qui présente une zone transversale plus étroite pour permettre le passage d'air que la première sortie (8) ;
un commutateur de conduit (12) qui commute de manière sélective entre les premier et deuxième conduits (9, 11) ; et
un dispositif de commande de conduit (72) qui commande le commutateur de conduit (12) pour commuter entre les conduits (9, 11) pendant le processus de séchage,
le régulateur de volume d'air (73) régulant la soufflante (4) de manière qu'un plus grand volume d'air sec est soufflé dans la partie de stockage (1) à une vitesse réduite selon la sélection du premier conduit (9) que le deuxième conduit (11) de manière que l'air sec est soufflé dans la partie de stockage (1) à une vitesse plus élevée selon la sélection du deuxième conduit (11) que le premier conduit (9),
le dispositif de commande de compresseur (74, 174) réduisant temporairement la vitesse de rotation du compresseur (16) avant que le dispositif de commande de conduit (72) ne commute entre les conduits (9, 11) pendant le processus de séchage, et puis le régulateur de volume d'air (73) réduisant temporairement la performance en soufflage de la soufflante (4) et ensuite le dispositif de commande de conduit (72) actionnant le commutateur de conduit (12) pour commuter entre les conduits (9, 11).

6. Sèche-linge selon la revendication 4 ou 5, dans lequel
la performance en soufflage temporairement réduite de la soufflante (4) par le régulateur de volume d'air (73) est augmentée jusqu'à une valeur déterminée après que le dispositif de commande de conduit (72) actionne le commutateur de conduit (12) pour commuter entre les conduits (9, 11) et puis la vitesse de rotation temporairement réduite du compresseur (16) par le dispositif de commande de compresseur (74, 174) est augmentée jusqu'à une valeur déterminée.

7. Sèche-linge selon l'une quelconque des revendications 4 à 6, dans lequel
le dispositif de commande de compresseur (74, 174) réduit au minimum la performance de compression sans arrêter le compresseur (16) tandis que la vitesse de rotation du compresseur (16) est temporairement réduite.

8. Sèche-linge selon l'une quelconque des revendications 1 à 7, comprenant en outre un dispositif de commande de réducteur de pression (75, 175) qui commande le réducteur de pression (18), dans lequel
le dispositif de commande de réducteur de pression (75, 175) augmente une quantité de réduction de pression du réducteur de pression (18) avec une augmentation de la vitesse de rotation du compresseur (16).

9. Sèche-linge selon l'une quelconque des revendications 1 à 8, dans lequel
le dispositif de commande de réducteur de pression (75, 175) réduit la quantité de réduction de pression du réducteur de pression (18) avec une augmentation de la vitesse de rotation du compresseur (16).

10. Sèche-linge selon l'une quelconque des revendications 1 à 9, comprenant en outre un détecteur d'entrée (80) qui détecte une entrée de soufflante pour déterminer la performance en soufflage de la soufflante (4), dans lequel
le dispositif de commande de compresseur (74, 174) détermine la fluctuation du volume d'air sec dans le conduit de circulation (13) pour commander la vitesse de rotation du compresseur (16), en fonction d'une augmentation ou d'une réduction de l'entrée de soufflante détectée par le détecteur d'entrée (80).

11. Sèche-linge, comprenant :
une partie de stockage (1) qui renferme du linge à sécher ;
un dispositif de pompe à chaleur (50) comportant une canalisation (20) reliant un compresseur (16), qui comprime le réfrigérant, un radiateur (17), un réducteur de pression (18), qui réduit la pression du réfrigérant sous pression après l'émission de chaleur au niveau du radiateur (17) et un absorbeur thermique (19), de manière que la canalisation (20) permette une circulation séquentielle du réfrigérant par le compresseur (16), le radiateur (17), le réducteur de pression (18) et l'absorbeur thermique (19) ;
un conduit de circulation (13) dans lequel la soufflante (4) est située pour souffler de l'air sec de manière que l'air sec circule de manière séquentielle depuis la partie de stockage (1) en passant par l'absorbeur thermique (19) et le radiateur (17) jusqu'à la partie de stockage (1) à nouveau ;
un régulateur de volume d'air (73) qui régule la soufflante (4) pour ajuster un volume d'air sec dans le conduit de circulation (13) ; et
un dispositif de commande de réducteur de pression (75, 175) qui régule une quantité de régulation du réducteur de pression (18), **caractérisé en ce que**
le dispositif de commande de réducteur de pression (75, 175) est conçu pour modifier la quantité de régulation du réducteur de pression (18) en fonction d'une fluctuation du volume d'air sec dans le conduit de circulation (13).

12. Sèche-linge selon la revendication 11, dans lequel
le dispositif de commande de réducteur de pression (75, 175) augmente la quantité de régulation du réducteur de pression (18) si le volume d'air sec diminue dans le conduit de circulation (13).

13. Sèche-linge selon la revendication 11 ou 12, dans lequel
le dispositif de commande de réducteur de pression (75, 175) réduit la quantité de régulation du réducteur de pression (18) si le volume d'air sec augmente dans le conduit de circulation (13).

14. Sèche-linge selon l'une quelconque des revendications 11 à 13, comprenant en outre :
un premier conduit (9) comportant une première sortie (8) ;
un deuxième conduit (11) comportant une deuxième sortie (10), qui présente une zone transversale plus étroite pour permettre le passage d'air que la première sortie (8) ;
un commutateur de conduit (12) qui commute de manière sélective entre les premier et deuxième conduits (9, 11) ; et
un dispositif de commande de conduit (72) qui commande le commutateur de conduit (12) pour commuter entre les conduits (9, 11) pendant le processus de séchage,
le régulateur de volume d'air (73) régulant la soufflante (4) de manière qu'un premier volume plus grand d'air sec est soufflé dans la partie de stockage (1) à une vitesse réduite selon la sélection du premier conduit (9) que le deuxième conduit (11) et de manière que l'air sec est soufflé dans la partie de stockage (1) à une vitesse plus élevée selon la sélection du deuxième conduit (11) que le premier conduit (9),
le dispositif de commande de réducteur de pression (75, 175) augmentant temporairement la quantité de régulation du réducteur de pression (18) avant que le dispositif de commande de conduit (72) ne commute entre les conduits (9, 11) pendant le processus de séchage et puis le régulateur de volume d'air (73) réduisant temporairement la performance en soufflage de la soufflante (4) et ensuite le dispositif de commande de conduit (72) actionnant le commutateur de conduit (12) pour commuter entre les conduits (9,11).

15. Sèche-linge selon la revendication 14, dans lequel
la performance en soufflage temporairement réduite de la soufflante (4) par le régulateur de volume d'air (73) est augmentée jusqu'à une valeur déterminée après que le dispositif de commande de conduit (72) actionne le commutateur de conduit (12) pour commuter entre les conduits (9, 11) et puis la quantité de régulation temporairement augmentée du réducteur de pression (18) par le dispositif de commande de réducteur de pression (75, 175) est réduite jusqu'à une valeur déterminée.

16. Sèche-linge selon l'une quelconque des revendications 11 à 15, dans lequel
le dispositif de commande de réducteur de pression (75, 175) modifie une zone transversale, qui permet le passage du réfrigérant, de manière à réguler la quantité de régulation.

17. Sèche-linge selon la revendication 14, dans lequel
le dispositif de commande de réducteur de pression (75, 175) réduit la zone transversale, qui permet le passage du réfrigérant et augmente la quantité de régulation de manière à réduire temporairement le débit du réfrigérant.

18. Sèche-linge selon l'une quelconque des revendications 11 à 17, comprenant en outre un détecteur d'entrée (80) qui détecte une entrée de soufflante pour déterminer la performance en soufflage de la soufflante (4), dans lequel
le dispositif de commande de réducteur de pression (75, 175) détermine la fluctuation du volume d'air sec dans le conduit de circulation (13) pour réguler la quantité de régulation du réducteur de pression (18), en fonction d'une augmentation ou réduction de l'entrée de soufflante détectée par le détecteur d'entrée (80).

19. Sèche-linge selon l'une quelconque des revendications 1 à 18, dans lequel le réducteur de pression (18) est une soupape de détente électrique.

20. Sèche-linge comprenant :
le sèche-linge selon l'une quelconque des revendications 1 à 19 ; et
une cuve à eau (2) qui contient la partie de stockage (1), la cuve à eau (2) stockant l'eau de lavage.
